(19) Europäisches Patentamt
European Patent Office
Office européen des brevets

(11) EP 2 604 118 A1

(12) **EUROPEAN PATENT APPLICATION**

(43) Date of publication:
**19.06.2013 Bulletin 2013/25**

(21) Application number: **11193829.6**

(22) Date of filing: **15.12.2011**

(51) Int Cl.:
***A01N 43/653*** *(2006.01)* ***A01P 7/00*** *(2006.01)*
***A01N 63/00*** *(2006.01)* ***A01N 63/04*** *(2006.01)*
***A01N 43/90*** *(2006.01)* ***A01N 47/40*** *(2006.01)*
***A01N 53/00*** *(2006.01)* ***A01N 43/88*** *(2006.01)*
***A01N 43/56*** *(2006.01)* ***A01N 43/36*** *(2006.01)*
***A01N 57/16*** *(2006.01)* ***A01N 51/00*** *(2006.01)*
***A01N 47/34*** *(2006.01)* ***A01N 57/12*** *(2006.01)*
***A01N 47/02*** *(2006.01)* ***A01N 47/38*** *(2006.01)*
***A01N 43/707*** *(2006.01)* ***A01N 43/54*** *(2006.01)*
***A01N 43/22*** *(2006.01)* ***A01N 47/24*** *(2006.01)*
***A01N 31/08*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Bayer CropScience AG**
**40789 Monheim am Rhein (DE)**

(72) Inventor: **The designation of the inventor has not yet been filed**

(54) **Active ingredient combinations having insecticidal and acaricidal properties**

(57) Th e novel active ingredient which comprise a compound of the formula (I) in cimbination with further avtive insecticidal ingredients or biological control agents are very suitable for control of animals pests such as insects and / or unwanted acarids and indirectly improve plant helath. The compound of the formula (I) in combination with further active insecticidal ingredients or biological control agents can be used for reducing overall damage of plants and plant parts as well as losses in harvested fruits or vegetables caused by insects, nematodes and phytopathogens.

EP 2 604 118 A1

## Description

The present invention relates to novel active ingredient combinations which comprise a compound of the formula (I) in combination with further active insecticidal ingredients or biological control agents and are very suitable for control of animal pests such as insects and / or unwanted acarids and indirectly improve plant growth. The present invention further relates to the use of a compound of the formula (I) in combination with further active insecticidal ingredients or biological control agents for reducing overall damage of plants and plant parts as well as losses in harvested fruits or vegetables caused by insects, nematodes and phytopathogens.

The compound of the formula (I) is known from WO 1999/055668 and WO 2006/043635) and its insecticidal action has been described. The active ingredients specified in this description by their common name are known, for example, from "The Pesticide Manual" 14th ed., British Crop Protection Council 2006, and the website http://www.alanwood.net/pesticides.

However, the acaricidal and/or insecticidal efficacy and/or the activity spectrum and/or the compatibility of the known compounds with plants, especially with respect to crop plants, is not always adequate.

It has now been found that active ingredient combinations comprising a compound of the formula (I)

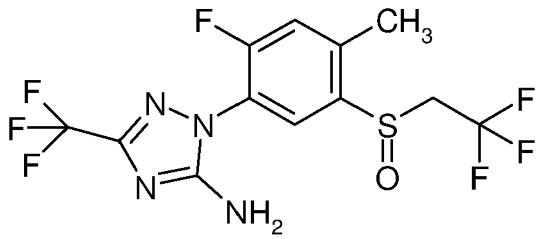

(I),

and one or more further insecticides and / or acaricides and / or biological control agents from the group (II), selected from

(1) Acetylcholinesterase (AChE) inhibitors, for example
carbamates, e.g. Alanycarb (II-1-1), Aldicarb (II-1-2), Bendiocarb (II-1-3), Benfuracarb (II-1-4), Butoxycarboxim (II-1-5), Carbaryl (II-1-6), Carbofuran (II-1-7), Carbosulfan (II-1-8), Ethiofencarb (II-1-9), Fenobucarb (II-1-10), Furathiocarb (II-1-11), Isoprocarb (II-1-12), Methomyl (II-1-13), Metolcarb (II-1-14), Oxamyl (II-1-15), Pirimicarb (II-1-16), Propoxur (II-1-17), Thiodicarb (II-1-18), and XMC (II-1-19); or
organophosphates, e.g. Acephate (II-1-20), Azinphos-ethyl (II-1-21), Azinphos-methyl (II-1-22), Chlorethoxyfos (II-1-23), Chlorfenvinphos (II-1-24), Chlorpyrifos (II-1-25), Chlorpyrifos-methyl (II-1-26), Cyanophos (II-1-27), Diazinon (II-1-28), Dichlorvos/DDVP (II-1-29), Dimethoate (II-1-30), Dimethylvinphos (II-1-31), Disulfoton (II-1-32), EPN (II-1-46), Ethion (II-1-33), Ethoprophos (II-1-34), Fenamiphos (II-1-35), Fenitrothion (II-1-36), Fenthion (II-1-37), Fosthiazate (II-1-38), Isofenphos (II-1-39), Isopropyl O-(methoxyaminothio-phosphoryl) salicylate (II-1-40), Isoxathion (II-1-41), Malathion (II-1-42), Methidathion (II-1-43), Monocrotophos (II-1-44), Naled (II-1-45), Oxydemeton-methyl (II-1-46), Phenthoate (II-1-47), Phosalone (II-1-48), Phosmet (II-1-49), Pirimiphos-methyl (II-1-50), Profenofos (II-1-51), Prothiofos (II-1-52), Pyraclofos (II-1-53), Pyridaphenthion (II-1-54), Quinalphos (II-1-55), Tetrachlorvinphos (II-1-56), Thiometon (II-1-57), Triclorfon (II-1-58), and Vamidothion (II-1-59);

(2) GABA-gated chloride channel antagonists, for example
cyclodiene organochlorines, e.g. Chlordane (II-2-1) and Endosulfan (II-2-2); or
phenylpyrazoles (fiproles), e.g. Fipronil (II-2-3) ;

(3) Sodium channel modulators / voltage-dependent sodium channel blockers, for example
pyrethroids, e.g. Acrinathrin (II-3-1), Allethrin (II-3-2), d-cis-trans Allethrin (II-3-3), d-trans Allethrin (II-3-4), Bifenthrin (II-3-5), Cycloprothrin (II-3-6), Cyfluthrin (II-3-7), beta-Cyfluthrin (II-3-8), Cyhalothrin (II-3-9), lambda-Cyhalothrin (II-3-10), gamma-Cyhalothrin (II-3-11), Cypermethrin (II-3-12), alpha-Cypermethrin (II-3-13), beta-Cypermethrin (II-3-14), theta-Cypermethrin (II-3-15), zeta-Cypermethrin (II-3-16), Deltamethrin (II-3-17), Etofenprox (II-3-18), Fenpropathrin (II-3-19), Fenvalerate (II-3-20), Flucythrinate (II-3-21), tau-Fluvalinate (II-3-22), Kadethrin (II-3-23), Permethrin (II-3-24), Phenothrin [(1R)-trans isomer) (II-3-25), Pyrethrine (pyrethrum) (II-3-26), Resmethrin (II-3-27), Silafluofen (II-3-28), Tefluthrin (II-3-29), Tetramethrin (II-3-30), Tetramethrin [(1R) isomers)] (II-3-31), and Tralomethrin (II-3-32), or
DDT (II-3-33); or Methoxychlor (II-3-34);

(4) Nicotinic acetylcholine receptor (nAChR) agonists, for example
neonicotinoids, e.g. Acetamiprid (II-4-1), Clothianidin (II-4-2), Dinotefuran (II-4-3), Imidacloprid (II-4-4), Nitenpyram (II-4-5), Thiacloprid (II-4-6), and Thiamethoxam (II-4-7); or
Nicotine (II-4-8);

(5) Nicotinic acetylcholine receptor (nAChR) allosteric activators, for example
spinosyns, e.g. Spinetoram (II-5-1) and Spinosad (II-5-2);

(6) Chloride channel activators, for example avermectins/milbemycins, e.g. Abamectin (II-6-1), Emamectin benzoate (II-6-2), Lepimectin (II-6-3), and Milbemectin (II-6-4);

(7) Juvenile hormone mimics, for example
juvenile hormon analogues, e.g. and Methoprene (II-7-1); or
Fenoxycarb (II-7-2); or Pyriproxyfen (II-7-3);

(8) Miscellaneous non-specific (multi-site) inhibitors, for example
alkyl halides, e.g. Methyl bromide (II-8-1) and other alkyl halides; or
Chloropicrin (II-8-2); or Sulfuryl fluoride (II-8-3); or Borax (II-8-4); or Tartar emetic (II-8-5);

(9) Selective homopteran feeding blockers, e.g. Pymetrozine (II-9-1);

(10) Mite growth inhibitors, e.g. Clofentezine (II-10-1), Hexythiazox (II-10-2), and Diflovidazin (II-10-3); or
Etoxazole (II-10-4);

(11) Microbial disruptors of insect midgut membranes, e.g. Bacillus thuringiensis subspecies israelensis (II-11-1), Bacillus sphaericus (II-11-2), Bacillus thuringiensis subspecies aizawai (II-11-3), Bacillus thuringiensis subspecies kurstaki (II-11-4), Bacillus thuringiensis subspecies tenebrionis (II-11-5), and BT crop proteins: Cry1Ab, Cry1Ac, Cry1Fa, Cry2Ab, mCry3A, Cry3Ab, Cry3Bb, Cry34/35Ab1 (II-11-6);

(12) Inhibitors of mitochondrial ATP synthase, for example Diafenthiuron (II-12-1); or
organotin miticides, e.g. Azocyclotin (II-12-2), Cyhexatin (II-12-3), and Fenbutatin oxide (II-12-4); or Propargite (II-12-5); or Tetradifon (II-12-6);

(13) Uncouplers of oxidative phoshorylation via disruption of the proton gradient, for example Chlorfenapyr (II-13-1), DNOC (II-13-2), and Sulfluramid (II-13-3);

(14) Nicotinic acetylcholine receptor (nAChR) channel blockers, for example Bensultap (II-14-1), Cartap hydrochloride (II-14-2), and Thiocyclam (II-14-3);

(15) Inhibitors of chitin biosynthesis, type 0, for example Chlorfluazuron (II-15-1), Diflubenzuron (II-15-2), Flucycloxuron (II-15-3), Flufenoxuron (II-15-4), Hexaflumuron (II-15-5), Lufenuron (II-15-6)" Teflubenzuron (II-15-7), and Triflumuron (II-15-8);

(16) Inhibitors of chitin biosynthesis, type 1, for example Buprofezin (II-16-1);

(17) Moulting disruptors, for example Cyromazine (II-17-1);

(18) Octopamine receptor agonists, for example Amitraz (II-18-1);

(19) Mitochondrial complex III electron transport inhibitors, for example Hydramethylnon (II-19-1); or Acequinocyl (II-19-2); or Fluacrypyrim (II-19-3);

(20) Mitochondrial complex I electron transport inhibitors, for example
METI acaricides, e.g. Fenpyroximate (II-20-1), Pyrimidifen (II-20-2), Pyridaben (II-20-3), Tebufenpyrad (II-20-4), and Tolfenpyrad (II-20-5); or
Rotenone (Derris) (II-20-6);

(21) Voltage-dependent sodium channel blockers, e.g. Indoxacarb (II-21-1);

(22) Inhibitors of acetyl CoA carboxylase, for example
tetronic and tetramic acid derivatives, e.g. Spirodiclofen (II-22-1);

(23) Mitochondrial complex IV electron transport inhibitors, for example
phosphines, e.g. Aluminium phosphide (II-23-1), Calcium phosphide (II-23-2), Phosphine (II-23-3), and Zinc phosphide (II-23-4); or
Cyanide (II-23-5).

(24) Ryanodine receptor modulators, for example
diamides, e.g. Chlorantraniliprole (II-24-1);
further active ingredients with unknown or uncertain mode of action, for example Amidoflumet (II-25-1), Azadirachtin (II-25-2), Benclothiaz (II-25-3), Benzoximate (II-25-4), Bifenazate (II-25-5), Bromopropylate (II-25-6), Chinomethionat (II-25-7), Cryolite (II-25-8), Cyantraniliprole (Cyazypyr) (II-25-9), Dicofol (II-25-10), Diflovidazin (II-25-11), Fluensulfone (II-25-12), Flufiprole (II-25-13), Fluopyram (II-25-14), Fufenozide (II-25-15), Imidaclothiz (II-25-16), Iprodione (II-25-17), Meperfluthrin (II-25-18), Pyrifluquinazon (II-25-19), Tetramethylfluthrin (II-25-20), and iodomethane (II-25-21); furthermore products based on Bacillus firmus (including but not limited to strain CNCM I-1582, such as, for example, VOTiVO™, BioNem) (II-25-22) Bacillus subtilis GB03 (II-25-23) and QST 713 (II-25-24), Bacillus amyloliquefaciens FZB24 (II-25-25) and FZB 42 (II-25-26), Bacillus thuringiensis subspecies aizawai (II-25-27), kurstaki (II-25-28), tenebrionis (II-25-29) and israelensis (II-25-30), Bacillus sphaericus, Acinetobacter sp., Pasteuria penetrans, Streptomyces venezuelae, Metarhizium anisopliae F52 (II-25-31), Metschnikowia fructicola (II-25-32), Paecilomyces lilacinus strain 251 (II-25-33), Paecilomyces fumosoroseus (II-25-34), Nomuraea rileyi (II-25-35), Hirsutella thompsoni, Beauveria bassiana, Beauveria brongniartii, Lagenidium giganteum, Myrothecium verrucaria,Tsukamurella paurometabola, Cydia pomonella granulosis virus (II-25-36), Adoxophyes orana granulosis virus, Helicoverpa armigera nucleopolyhedro virus, Spodoptera exigua nucleopolyhedro virus, Spodoptera littoralis nucleopolyhedro virus, Spodoptera litura nucleopolyhedro virus, Neodiprion abietis nucleopolyhedro virus, Neodiprion sertifer nucleopolyhedro virus, Verticillium lecanii, Pyrethrum (II-25-37), Harpin-Protein (II-25-38), Thymol (II-25-39), Chitin, Quillaja saponaria extract.
or one of the following known active compounds: 3-bromo-N-{2-bromo-4-chloro-6-[(1-cyclopropylethyl)carbamoyl] phenyl}-1-(3-chloropyridin-2-yl)-1H-pyrazole-5-carboxamide (II-25-40) (known from W02005/077934), 4-{[(6-bromopyridin-3-yl)methyl](2-fluoroethyl)amino}furan-2(5H)-one (II-25-41) (known from W02007/115644), 4-{[(6-fluoropyridin-3-yl)methyl](2,2-difluoroethyl)amino}furan-2(5H)-one (II-25-42) (known from W02007/115644), 4-{[(2-chloro-1,3-thiazol-5-yl)methyl](2-fluoroethyl)amino}furan-2(5H)-one (II-25-43) (known from W02007/115644), 4-{[(6-chlorpyridin-3-yl)methyl](2-fluoroethyl)amino}furan-2(5H)-one (II-25-44) (known from W02007/115644), Flupyradifurone (II-25-45), 4-{[(6-chlor-5-fluoropyridin-3-yl)methyl](methyl)amino}furan-2(5H)-one (II-25-46) (known from WO2007/115643), 4-{[(5,6-dichloropyridin-3-yl)methyl](2-fluoroethyl)amino}furan-2(5H)-one (II-25-47) (known from WO2007/115646), 4-{[(6-chloro-5-fluoropyridin-3-yl)methyl](cyclopropyl)amino}furan-2(5H)-one (II-25-48) (known from WO2007/115643), 4-{[(6-chloropyridin-3-yl)methyl](cyclopropyl)amino}furan-2(5H)-one (II-25-49) (known from EP-A-0 539 588), 4-{[(6-chlorpyridin-3-yl)methyl](methyl)amino}furan-2(5H)-one (II-25-50) (known from EP-A-0 539 588), {[1-(6-chloropyridin-3-yl)ethyl](methyl)oxido-$\lambda^4$-sulfanylidene}cyanamide (II-25-51) (known from WO2007/ 149134) and its diastereomers {[(1R)-1-(6-chloropyridin-3-yl)ethyl](methyl)oxido-$\lambda^4$-sulfanylidene}cyanamide (A) (II-25-52), and {[(1S)-1-(6-chloropyridin-3-yl)ethyl](methyl)oxido-$\lambda^4$-sulfanylidene}cyanamide (B) (II-25-53) (also known from WO2007/149134) as well as Sulfoxaflor (II-25-54) and its diastereomers [(R)-methyl(oxido){(1R)-1-[6-(trifluoromethyl)pyridin-3-yl]ethyl}-$\lambda^4$-sulfanylidene]cyanamide (A1) (II-25-55), and [(S)-methyl(oxido){(1S)-1-[6-(trifluoromethyl)pyridin-3-yl]ethyl}-$\lambda^4$-sulfanylidene]cyanamide (A2) (II-25-56), referred to as group of diastereomers A (known from WO2010/074747, WO2010/074751), [(R)-methyl(oxido){(1S)-1-[6-(trifluoromethyl)pyridin-3-yl]ethyl}-$\lambda^4$-sulfanylidene]cyanamide (B1) (II-25-57), and [(S)-methyl(oxido){(1R)-1-[6-(trifluoromethyl)pyridin-3-yl]ethyl}-$\lambda^4$-sulfanylidene]cyanamide (B2) (II-25-58), referred to as group of diastereomers B (also known from WO2010/ 074747, WO2010/074751), and 11-(4-chloro-2,6-dimethylphenyl)-12-hydroxy-1,4-dioxa-9-azadispiro[4.2.4.2]tetradec-11-en-10-one (II-25-59) (known from WO2006/089633), 3-(4'-fluoro-2,4-dimethylbiphenyl-3-yl)-4-hydroxy-8-oxa-1-azaspiro[4.5]dec-3-en-2-one (II-25-60) (known from WO2008/067911), 1-{2-fluoro-4-methyl-5-[(2,2,2-trifluorethyl)sulfinyl]phenyl}-3-(thifluoromethyl)-1H-1,2,4-triazol-5-amine (II-25-61) (known from WO2006/043635), [(3S, 4aR,12R,12aS,12bS)-3-[(cyclopropylcarbonyl)oxy]-6,12-dihydroxy-4,12b-dimethyl-11-oxo-9-(pyridin-3-yl)-1,3,4, 4a,5,6,6a,12,12a,12b-decahydro-2H,11H-benzo[f]pyrano[4,3-b]chromen-4-yl]methyl cyclopropanecarboxylate (II-25-62) (known from WO2008/066153), 2-cyano-3-(difluoromethoxy)-N,N-dimethylbenzenesulfonamide (II-25-63) (known from WO2006/056433), 2-cyano-3-(difluoromethoxy)-N-methylbenzenesulfonamide (II-25-64) (known from WO2006/100288), 2-cyano-3-(difluoromethoxy)-N-ethylbenzenesulfonamide (II-25-65) (known from WO2005/ 035486), 4-(difluoromethoxy)-N-ethyl-N-methyl-1,2-benzothiazol-3-amine 1,1-dioxide (II-25-66) (known from WO2007/057407), N-[1-(2,3-dimethylphenyl)-2-(3,5-dimethylphenyl)ethyl]-4,5-dihydro-1,3-thiazol-2-amine (II-25-67) (known from WO2008/104503), {1'-[(2E)-3-(4-chlorophenyl)prop-2-en-1-yl]-5-fluorospiro[indole-3,4'-piperidin]-1(2H)-yl}(2-chloropyridin-4-yl)methanone (II-25-68) (known from WO2003/106457), 3-(2,5-dimethylphenyl)-4-hydroxy-8-methoxy-1,8-diazaspiro[4.5]dec-3-en-2-one (II-25-69) (known from WO2009/049851), 3-(2,5-dimethylphenyl)-8-methoxy-2-oxo-1,8-diazaspiro[4.5]dec-3-en-4-yl ethyl carbonate (II-25-50) (known from WO2009/049851), 4-(but-2-yn-1-yloxy)-6-(3,5-dimethylpiperidin-1-yl)-5-fluoropyrimidine (II-25-71) (known from WO2004/099160), (2,2,3,3,4,4,5,5-octafluoropentyl)(3,3,3-trifluoropropyl)malononitrile (II-25-72) (known from WO2005/063094), (2,2,3,3,4,4,5,5-octafluoropentyl)(3,3,4,4,4-pentafluorobutyl)malononitrile (II-25-73) (known from WO2005/063094), 8-[2-(cyclopropylmethoxy)-4-(trifluoromethyl)phenoxy]-3-[6-(trifluoromethyl)pyridazin-3-yl]-3-azabicyclo[3.2.1]octane (II-25-74) (known from WO2007/040280), Flometoquin (11-25-75), PF1364 (CAS-Reg.No. 1204776-60-2) (II-25-76) (known from JP2010/018586), 5-[5-(3,5-dichlorophenyl)-5-(trifluoromethyl)-4,5-dihydro-1,2-oxazol-3-yl]-2-(1H-1,2,4-triazol-1-yl)benzonitrile (II-25-77) (known from WO2007/075459), 5-[5-(2-chloropyridin-4-yl)-5-(trifluoromethyl)-4,5-dihydro-1,2-oxazol-3-yl]-2-(1H-1,2,4-triazol-1-yl)benzonitrile (II-25-78) (known from WO2007/075459), 4-[5-(3,5-dichlorophenyl)-5-(trifluoromethyl)-4,5-dihydro-1,2-oxazol-3-yl]-2-methyl-N-{2-oxo-2-[(2,2,2-trifluoroethyl)amino]ethyl}benzamide (II-25-79) (known from WO2005/085216), 4-{[(6-chloropyridin-3-yl)methyl](cyclopropyl)amino}-1,3-oxazol-2(5H)-one (II-25-80), 4-{[(6-chloropyridin-3-yl)methyl](2,2-difluoroethyl)amino}-1,3-oxazol-2(5H)-one (II-25-81), 4-{[(6-chloropyridin-3-yl)methyl](ethyl)amino}-1,3-oxazol-2(5H)-one (II-25-82), 4-{[(6-chloropyridin-3-yl)methyl](methyl)amino}-1,3-oxazol-2(5H)-one (II-25-83) (all known from WO2010/005692), NNI-0711 (II-25-84) (known from WO2002/096882), 1-acetyl-N-[4-(1,1,1,3,3,3-hexafluoro-2-methoxypropan-2-yl)-3-isobutylphenyl]-N-isobutyryl-3,5-dimethyl-1H-pyrazole-4-carboxamide (II-25-85) (known from WO2002/096882), methyl 2-[2-({[3-bromo-1-(3-chloropyridin-2-yl)-1H-pyrazol-5-yl]carbonyl}amino)-5-chloro-3-methylbenzoyl]-2-methylhydrazinecarboxylate (II-25-86) (known from WO2005/085216), methyl 2-[2-({[3-bromo-1-(3-chloropyridin-2-yl)-1H-pyrazol-5-yl]carbonyl}amino)-5-cyano-3-methylbenzoyl]-2-ethylhydrazinecarboxylate (II-25-87) (known from WO-2005/085216), methyl 2-[2-({[3-bromo-1-(3-chloropyridin-2-yl)-1H-pyrazol-5-yl]carbonyl}amino)-5-cyano-3-methylbenzoyl]-2-methylhydrazinecarboxylate (II-25-88) (known from WO2005/085216), methyl 2-[3,5-dibromo-2-({[3-bromo-1-(3-chloropyridin-2-yl)-1H-pyrazol-5-yl]carbonyl}amino)benzoyl]-1,2-diethylhydrazinecarboxylate (II-25-89) (known from WO2005/085216), methyl 2-[3,5-dibromo-2-({[3-bromo-1-(3-chloropyridin-2-yl)-1H-pyrazol-5-yl]carbonyl}amino)benzoyl]-2-ethylhydrazinecarboxylate (II-25-90) (known from WO2005/085216), (5RS,7RS;5RS,7SR)-1-(6-chloro-3-pyridylmethyl)-1,2,3,5,6,7-hexahydro-7-methyl-8-nitro-5-propoxyimidazo[1,2-a]pyridine (II-25- 91) (known from WO2007/101369), 2-{6-[2-(5-fluoropyridin-3-yl)-1,3-thiazol-5-yl]pyridin-2-yl}pyrimidine (II-25-92) (known from WO2010/006713), 2-{6-[2-(pyridin-3-yl)-1,3-thiazol-5-yl]pyridin-2-yl}pyrimidine (II-25-93) (known from WO2010/006713), 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide (II-25-94) (known from WO2010/069502), 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide (II-25-95) (known from WO2010/069502), N-[2-(tert-butylcarbamoyl)-4-cyano-6-methylphenyl]-1-(3-chloropyridin-2-yl)-3-{[5-(trifluoromethyl)-1H-tetrazol-1-yl]methyl}-1H-pyrazole-5-carboxamide (II-25-96) (known from WO2010/069502), N-[2-(tert-butylcarbamoyl)-4-cyano-6-methylphenyl]-1-(3-chloropyridin-2-yl)-3-{[5-(trifluoromethyl)-2H-tetrazol-2-yl]methyl}-1H-pyrazole-5-carboxamide (II-25-97) (known from WO2010/069502), (1E)-N-[(6-chloropyridin-3-yl)methyl]-N'-cyano-N-(2,2-difluoroethyl)ethanimidamide (II-25-98) (known from WO-2008/009360), N-[2-(5-amino-1,3,4-thiadiazol-2-yl)-4-chloro-6-methylphenyl]-3-bromo-1-(3-chloropyridin-2-yl)-1H-pyrazole-5-carboxamide (II-25-99) (known from CN102057925), and methyl 2-[3,5-dibromo-2-({[3-bromo-1-(3-chloropyridin-2-yl)-1H-pyrazol-5-yl]carbonyl}amino)benzoyl]-2-ethyl-1-methylhydrazinecarboxylate (II-25-100) (known from WO2011/049233),

or further biological control agents selected from bacteria, in particular spore-forming bacteria, fungi or yeasts, protozoas, viruses, optionally in the presence of inoculants,

are very suitable for control of animal pests such as insects and/or acaricides and indirectly improve plant health. Further, the compound of the formula (I) in combination with further active insecticidal ingredients or biological control agents can be used for reducing overall damage of plants and plant parts as well as losses in harvested fruits or vegetables caused by insects, nematodes and phytopathogens.

The active ingredients of group (II) are, in accordance with the IRAC classification, assigned to different classes and groups according to their mechanism of action.

If, within this description, the short form of the common name of an active ingredient is used, this in each case encompasses all common derivatives, such as the esters and salts, and isomers, especially optical isomers, especially the commercial form or forms. If an ester or salt is referred to by the common name, this also refers in each case to all other common derivatives, such as other esters and salts, the free acids and neutral compounds, and isomers, especially optical isomers, especially the commercial form or forms. The chemical compound names mentioned refer to at least one of the compounds encompassed by the common name, frequently a preferred compound.

The compound of the formula (I) has a chiral sulphoxide group so that it forms two enantiomers having R or S

configuration at the sulphur:

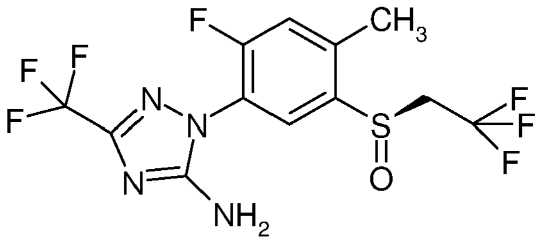

(I-A), R enantiomer,

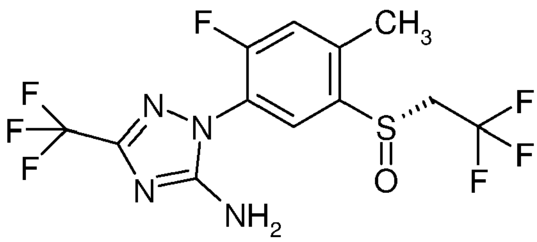

(I-B), S enantiomer

In the synthesis from achiral starting materials the two enantiomers are formed in equal amounts so that a racemate is present. The separation of the racemate known from the literature (cf. WO 1999/055668 and WO 2006/043635) into the individual enantiomers can be carried out by preparative HPLC on a chiral stationary phase. The separation may take place, for example, on a Daical Chiralpak AD-H 250 mm x 30 mm column using a mobile phase of n-heptane/ethanol/methanol 60:20:20 (v/v/V), a flow rate of 30 ml/min and UV detection at 220 nm. The two enantiomers can then be characterized by methods known from the literature, for example by X-ray structural analysis or by determining the optical rotation.

Accordingly, the present invention provides novel active compound combinations comprising the racemate or the R or S enantiomer of the compound of the formula (I) and at least one further insecticidally active compound of group (II).

Surprisingly, the insecticidal and/or acaricidal action of the inventive active ingredient combinations is much higher than the total of the actions of the individual active ingredients. There is an unforeseeable true synergistic effect and not just complementary action.

Preferred combinations comprise one of the preferred compounds of the formula (I) as specified below and at least one preferred active ingredient selected from the group (II).

Preferred compound is the racemate of the formula (I)

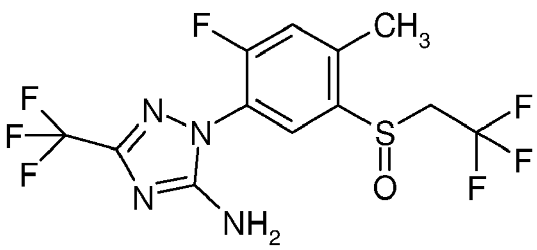

(I)

Likewise preferred are the respective R or S enantiomers of the formulae (1-A),(I-B):

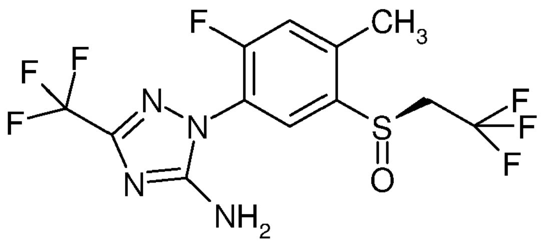

(I-A),

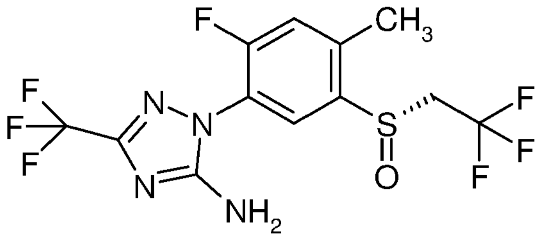

(I-B).

Preferred mixing partners from group (II) are the following ones selected from Abamectin, Acephate, Acequinocyl, Acetamiprid, Acrinathrin, Aldicarb, Alpha-Cypermethrin, Amitraz, Azadirachtin, Azinphos-methyl, Benfuracarb, Beta-Cyfluthrin, Bifenazate, Bifenthrin, Bensultap (Nereistoxin), Buprofezin, Carbaryl, Carbofuran, Carbosulfan, Cartap hydrochloride, Chloranthraniliprole (Rynazypyr), Chlorfenapyr, Chlorfluazuron, Chloropicrin, Chlorpyrifos, Clothianidin, Cyantraniliprole (Cyazypyr), Cyfluthrin, Cyhalothrin, Cypermethrin, Cyromazine, Deltamethrin, Diafenthiuron, Diazinon, Dichloropropene, Dichlorfos, Dicofol, Diflubenzuron, Dimethoate, Dinotefuran, Disulfoton, Emamectin-(benzoate), Endosulfan, Ethoprophos, Etofenprox, Etoxazole, Fenamiphos, Fenbutatin oxide, Fenitrothion, Fenobucarb, Fenoxycarb, Fenpropathrin, Fenpyroximate, Fenvalerate, Fipronil, Fluacrypyrim, Fluensulfone, Flufenoxuron, Flupyradifurone, Fosthiazate, Gamma-Cyhalothrin, Hexythiazox, Hexaflumuron, Imidacloprid, Imidaclothiz, Indoxacarb, Lambda-Cyhalothrin, Lepimectin, Lufenuron, Malathion, Metaldehyde, Methidathion, Methomyl, Milbemectin, Monocrotophos, Nitenpyram, Oxamyl, Permethrin, Pirimicarb, Profenofos, Propargite, Pymetrozine, Pyrafluprole, Pyrethrin, Pyridaben, Pyrifluquinazone, Pyrimethanil, Pyrimidifen, Pyriprole, Pyriproxyfen, Quinalphos, Resmethrin, Spinetoram, Spinosad, Spirodiclofen, Sulfoxaflor, Tau-Fluvalinate, Tebufenpyrad, Teflubenzuron, Tefluthrin, Thiacloprid, Thiamethoxam, Thiodicarb, Trichlorfon, Triflumuron; Zeta-Cypermethrin, 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide/ 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamid, 2-{6-[2-(5-fluoropyridin-3-yl)-1,3-thiazol-5-yl]pyridin-2-yl}pyrimidine, 2-{6-[2-(pyridin-3-yl)-1,3-thiazol-5-yl]pyridin-2-yl}pyrimidine, (1E)-N-[(6-chloropyridin-3-yl)methyl]-N'-cyano-N-(2,2-difluoroethyl)ethanimidamide, Bacillus firmus I-1582, Bacillus subtilis GB03 and QST 713, Bacillus amyloliquefaciens FZB24 and FZB 42, Bacillus thuringiensis subspecies aizawai, kurstaki, tenebrionis and israelensis, Metarhizium anisopliae F52, Metschnikowia fructicola, Paecilomyces lilacinus strain 251, Paecilomyces fumosoroseus, Nomuraea rileyi, Cydia pomonella granulosis virus, Pyrethrum, Harpin-Protein and Thymol.

More preferred are combinations comprising one preferred compound of the formula (I) and at least one more preferred active ingredient of group (II), selected from

Abamectin, Acetamiprid, Acrinathrin, Alpha-Cypermethrin, Beta-Cyfluthrin, Bifenthrin, Buprofezin, Flupyradifurone, Chlorfenapyr, Chlorpyrifos, Clothianidin, Cyantraniliprole, Cyfluthrin, Cypermethrin, Deltamethrin, Diafenthiuron, Dinotefuran, Emamectin-(benzoate), Fenpyroximate, Fipronil, Fluensulfone, Gamma-Cyhalothrin, Imidacloprid, Indoxacarb, L-Cyhalothrin, Milbemectin, Nitenpyram, Pyrifluquinazone, Pymetrozine, Chloranthraniliprole, Spinetoram, Spinosad, Spirodiclofen, Sulfoxaflor, Tebufenpyrad, Tefluthrin, Thiacloprid, Thiamethoxam, Thiodicarb, Triflumuron; 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide/ 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide; 2-{6-[2-(5-fluoropyridin-3-yl)-1,3-thiazol-5-yl]pyridin-2-yl}pyrimidine, 2-{6-[2-(pyridin-3-yl)-1,3-thiazol-5-yl]pyridin-2-yl}pyrimidine (1E)-N-[(6-chloropyridin-3-yl)methyl]-N'-cyano-N-(2,2-difluoroethyl)ethanimidamide, Bacillus firmus I-1582, Bacillus subtilis GB03 and QST 713, Bacillus amyloliquefaciens FZB24 and FZB 42, Bacillus thuringiensis subspecies aizawai, kurstaki, tenebrionis and israelensis, Metarhizium anisopliae F52, Paecilomyces lilacinus strain 251, Nomuraea rileyi.

Even more preferred are combinations comprising one preferred compound of formula (I) and one even more preferred active ingredient from group (II), selected from

Abamectin, Acetamiprid, Acrinathrin, Beta-Cyfluthrin, Bifenthrin, Buprofezin, Flupyradifurone, Chlorfenapyr, Chlorpyrifos, Clothianidin, Cyantraniliprole, Cyfluthrin, Deltamethrin, Diafenthiuron, Dinotefuran, Emamectin-(benzoate), Fenpyroximate, Fipronil, Fluensulfone, Imidacloprid, Indoxacarb, L-Cyhalothrin, Milbemectin, Nitenpyram, Pyrifluquinazone, Pymetrozine, Chloranthraniliprole, Spinetoram, Spinosad, Spirodiclofen, Sulfoxaflor, Tebufenpyrad, Thiacloprid, Thiamethoxam, Thiodicarb, Triflumuron; 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide/ 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide; 2-{6-[2-(5-fluoropyridin-3-yl)-1,3-thiazol-5-yl]pyridin-2-yl}pyrimidine, 2-{6-[2-(pyridin-3-yl)-1,3-thiazol-5-yl]pyridin-2-yl}pyrimidine (1E)-N-[(6-chloropyridin-3-yl)methyl]-N'-cyano-N-(2,2-difluoroethyl)ethanimidamide, Bacillus firmus I-1582, Bacillus subtilis GB03 and QST 713, Bacillus amyloliquefaciens FZB24 and FZB 42, Bacillus thuringiensis subspecies aizawai, kurstaki, tenebrionis and israelensis, Metarhizium anisopliae F52, Paecilomyces lilacinus strain 251, Nomuraea rileyi.

Especially preferred are combinations comprising the compound (I) and exactly one active ingredient from group II in the mixing ratios specified in Table 1.

Especially preferred are combinations comprising the compound (I-A) and exactly one active ingredient from group II in the mixing ratios specified in Table 1.

Especially preferred are combinations comprising the compound (I-B) and exactly one active ingredient from group II in the mixing ratios specified in Table 1.

The active ingredient combinations may additionally also comprise further fungicidally, acaricidally or insecticidally active mixture components.

When the active ingredients are present in particular weight ratios in the inventive active ingredient combinations, the improved effect is manifested. However, the weight ratios of the active ingredients in the active ingredient combinations can be varied within a relatively wide range. In general, the inventive combinations comprise active ingredient of the formula (I) to the mixing partner from group (II) in a ratio of 625:1 to 1: 625; whereas for inventive combinations comprising the active ingredient of the formula (I) and a biological control agent selected from group (II), the ratio is typically 100:1 1 to 1:2000. Preferred and more preferred mixing ratios are specified in Table 1 below.

the mixing ratios are based on weight ratios. The ratio should be understood as the active ingredient of the formula (I): mixing partner of the group (II) to active ingredient of the formula (I):mixing partner of the group (II).

| Nr. | Mixing partner | Preferred mixing ratio | More preferred mixing ratio | Most preferred mixing ratio |
|---|---|---|---|---|
| 1. | Abamectin | 625:1 bis 1:625 | 125:1 bis 1:125 | 25:1 bis 1:25 |
| 2. | Acephate | 125:1 bis 1:125 | 25:1 bis 1:25 | 5:1 bis 1:5 |
| 3. | Acequinocyl | 125:1 bis 1:125 | 25:1 bis 1:25 | 5:1 bis 1:5 |
| 4. | Acetamiprid | 125:1 bis 1:125 | 25:1 bis 1:25 | 5:1 bis 1:5 |
| 5. | Acrinathrin | 125:1 bis 1:125 | 25:1 bis 1:25 | 5:1 bis 1:5 |
| 6. | Aldicarb | 125:1 bis 1:125 | 25:1 bis 1:25 | 5:1 bis 1:5 |
| 7. | alpha-Cypermethrin | 125:1 bis 1:125 | 25:1 bis 1:25 | 5:1 bis 1:5 |
| 8. | Amitraz | 125:1 bis 1:125 | 25:1 bis 1:25 | 5:1 bis 1:5 |
| 9. | Azinphos-methyl | 125:1 bis 1:125 | 25:1 bis 1:25 | 5:1 bis 1:5 |
| 10. | Bacillus amyloliquefaciens FZB24 | 100:1 bis 1:1000 | 50:1 bis 1:500 | 5:1 bis 1:100 |
| 11. | Bacillus amyloliquefaciens FZB42 | 100:1 bis 1:1000 | 50:1 bis 1:500 | 5:1 bis 1:100 |
| 12. | Bacillus firmus I-1582 | 100:1 bis 1:1000 | 50:1 bis 1:500 | 5:1 bis 1:100 |
| 13. | Bacillus subtilis GB03 | 100:1 bis 1:1000 | 50:1 bis 1:500 | 5:1 bis 1:100 |
| 14. | Bacillus subtilis QST 713 | 100:1 bis 1:1000 | 50:1 bis 1:500 | 5:1 bis 1:100 |
| 15. | Bacillus thuringiensis aizawai | 100:1 bis 1:1000 | 50:1 bis 1:500 | 5:1 bis 1:100 |

(continued)

| Nr. | Mixing partner | Preferred mixing ratio | More preferred mixing ratio | Most preferred mixing ratio |
|---|---|---|---|---|
| 16. | Bacillus thuringiensis israelensis | 100:1 bis 1:1000 | 50:1 bis 1:500 | 5:1 bis 1:100 |
| 17. | Bacillus thuringiensis kurstaki | 100:1 bis 1:1000 | 50:1 bis 1:500 | 5:1 bis 1:100 |
| 18. | Bacillus thuringiensis tenebrionis | 100:1 bis 1:1000 | 50:1 bis 1:500 | 5:1 bis 1:100 |
| 19. | Benfuracarb | 125:1 bis 1:125 | 25:1 bis 1:25 | 5:1 bis 1:5 |
| 20. | beta-Cyfluthrin | 125:1 bis 1:125 | 25:1 bis 1:25 | 5:1 bis 1:5 |
| 21. | Bifenazate | 125:1 bis 1:125 | 25:1 bis 1:25 | 5:1 bis 1:5 |
| 22. | Bifenthrin | 125:1 bis 1:125 | 25:1 bis 1:25 | 5:1 bis 1:5 |
| 23. | Bensultap (Nereistoxin) | 125:1 bis 1:125 | 25:1 bis 1:25 | 5:1 bis 1:5 |
| 24. | Buprofezin | 625:1 bis 1:625 | 125:1 bis 1:125 | 25:1 bis 1:25 |
| 25. | Carbaryl | 125:1 bis 1:125 | 25:1 bis 1:25 | 5:1 bis 1:5 |
| 26. | Carbofuran | 125:1 bis 1:125 | 25:1 bis 1:25 | 5:1 bis 1:5 |
| 27. | Carbosulfan | 125:1 bis 1:125 | 25:1 bis 1:25 | 5:1 bis 1:5 |
| 28. | Cartap hydrochloride | 125:1 bis 1:125 | 25:1 bis 1:25 | 5:1 bis 1:5 |
| 29. | Chlorantraniliprole (Rynaxypyr) | 125:1 bis 1:125 | 25:1 bis 1:25 | 5:1 bis 1:5 |
| 30. | Chlorfenapyr | 125:1 bis 1:125 | 25:1 bis 1:25 | 5:1 bis 1:5 |
| 31. | Chloropicrin | 125:1 bis 1:125 | 25:1 bis 1:25 | 5:1 bis 1:5 |
| 32. | Chlorpyrifos | 125:1 bis 1:125 | 25:1 bis 1:25 | 5:1 bis 1:5 |
| 33. | Clothianidin | 125:1 bis 1:125 | 25:1 bis 1:25 | 5:1 bis 1:5 |
| 34. | Cyantraniliprole (Cyazypyr) | 125:1 bis 1:125 | 25:1 bis 1:25 | 5:1 bis 1:5 |
| 35. | Cyfluthrin | 125:1 bis 1:125 | 25:1 bis 1:25 | 5:1 bis 1:5 |
| 36. | Cyhalothrin | 125:1 bis 1:125 | 25:1 bis 1:25 | 5:1 bis 1:5 |
| 37. | Cypermethrin | 125:1 bis 1:125 | 25:1 bis 1:25 | 5:1 bis 1:5 |
| 38. | Cyromazine | 125:1 bis 1:125 | 25:1 bis 1:25 | 5:1 bis 1:5 |
| 39. | Deltamethrin | 125:1 bis 1:125 | 25:1 bis 1:25 | 5:1 bis 1:5 |
| 40. | Diafenthiuron | 125:1 bis 1:125 | 25:1 bis 1:25 | 5:1 bis 1:5 |
| 41. | Diazinon | 125:1 bis 1:125 | 25:1 bis 1:25 | 5:1 bis 1:5 |
| 42. | Dichloropropene | 125:1 bis 1:125 | 25:1 bis 1:25 | 5:1 bis 1:5 |
| 43. | Dichlorvos | 125:1 bis 1:125 | 25:1 bis 1:25 | 5:1 bis 1:5 |
| 44. | Dicofol | 125:1 bis 1:125 | 25:1 bis 1:25 | 5:1 bis 1:5 |
| 45. | Diflubenzuron | 125:1 bis 1:125 | 25:1 bis 1:25 | 5:1 bis 1:5 |
| 46. | Dimethoate | 125:1 bis 1:125 | 25:1 bis 1:25 | 5:1 bis 1:5 |
| 47. | Dinotefuran | 125:1 bis 1:125 | 25:1 bis 1:25 | 5:1 bis 1:5 |
| 48. | Disulfoton | 125:1 bis 1:125 | 25:1 bis 1:25 | 5:1 bis 1:5 |
| 49. | Emamectin (-benzoate) | 625:1 bis 1:625 | 125:1 bis 1:125 | 25:1 bis 1:25 |

(continued)

| Nr. | Mixing partner | Preferred mixing ratio | More preferred mixing ratio | Most preferred mixing ratio |
|---|---|---|---|---|
| 50. | Endosulfan | 125:1 bis 1:125 | 25:1 bis 1:25 | 5:1 bis 1:5 |
| 51. | Ethoprophos | 125:1 bis 1:125 | 25:1 bis 1:25 | 5:1 bis 1:5 |
| 52. | Etofenprox | 125:1 bis 1:125 | 25:1 bis 1:25 | 5:1 bis 1:5 |
| 53. | Etoxazole | 125:1 bis 1:125 | 25:1 bis 1:25 | 5:1 bis 1:5 |
| 54. | Fenamiphos | 125:1 bis 1:125 | 25:1 bis 1:25 | 5:1 bis 1:5 |
| 55. | Fenbutatin oxide | 125:1 bis 1:125 | 25:1 bis 1:25 | 5:1 bis 1:5 |
| 56. | Fenitrothion | 125:1 bis 1:125 | 25:1 bis 1:25 | 5:1 bis 1:5 |
| 57. | Fenobucarb | 125:1 bis 1:125 | 25:1 bis 1:25 | 5:1 bis 1:5 |
| 58. | Fenoxycarb | 125:1 bis 1:125 | 25:1 bis 1:25 | 5:1 bis 1:5 |
| 59. | Fenpropathrin | 125:1 bis 1:125 | 25:1 bis 1:25 | 5:1 bis 1:5 |
| 60. | Fenpyroximate | 125:1 bis 1:125 | 25:1 bis 1:25 | 5:1 bis 1:5 |
| 61. | Fenvalerate | 125:1 bis 1:125 | 25:1 bis 1:25 | 5:1 bis 1:5 |
| 62. | Fipronil | 125:1 bis 1:125 | 25:1 bis 1:25 | 5:1 bis 1:5 |
| 63. | Fluacrypyrim | 125:1 bis 1:125 | 25:1 bis 1:25 | 5:1 bis 1:5 |
| 64. | Fluensulfone | 625:1 bis 1:625 | 500:1 bis 1:500 | 100:1 bis 1:100 |
| 65. | Flufenoxuron | 125:1 bis 1:125 | 25:1 bis 1:25 | 5:1 bis 1:5 |
| 66. | Flupyradifurone | 125:1 bis 1:125 | 25:1 bis 1:25 | 5:1 bis 1:5 |
| 67. | Fosthiazate | 125:1 bis 1:125 | 25:1 bis 1:25 | 5:1 bis 1:5 |
| 68. | gamma-Cyhalothrin | 125:1 bis 1:125 | 25:1 bis 1:25 | 5:1 bis 1:5 |
| 69. | Hexythiazox | 125:1 bis 1:125 | 25:1 bis 1:25 | 5:1 bis 1:5 |
| 70. | Imidacloprid | 125:1 bis 1:125 | 25:1 bis 1:25 | 5:1 bis 1:5 |
| 71. | Imidaclothiz | 125:1 bis 1:125 | 25:1 bis 1:25 | 5:1 bis 1:5 |
| 72. | Indoxacarb | 125:1 bis 1:125 | 25:1 bis 1:25 | 5:1 bis 1:5 |
| 73. | Lambda-Cyhalothrin | 125:1 bis 1:125 | 25:1 bis 1:25 | 5:1 bis 1:5 |
| 74. | Lepimectin | 125:1 bis 1:125 | 25:1 bis 1:25 | 5:1 bis 1:5 |
| 75. | Lufenuron | 125:1 bis 1:125 | 25:1 bis 1:25 | 5:1 bis 1:5 |
| 76. | Malathion | 125:1 bis 1:125 | 25:1 bis 1:25 | 5:1 bis 1:5 |
| 77. | Metaldehyde | 125:1 bis 1:125 | 25:1 bis 1:25 | 5:1 bis 1:5 |
| 78. | Methidathion | 125:1 bis 1:125 | 25:1 bis 1:25 | 5:1 bis 1:5 |
| 79. | Methomyl | 125:1 bis 1:125 | 25:1 bis 1:25 | 5:1 bis 1:5 |
| 80. | Milbemectin | 125:1 bis 1:125 | 25:1 bis 1:25 | 5:1 bis 1:5 |
| 81. | Monocrotophos | 125:1 bis 1:125 | 25:1 bis 1:25 | 5:1 bis 1:5 |
| 82. | Nitenpyram | 125:1 bis 1:125 | 25:1 bis 1:25 | 5:1 bis 1:5 |
| 83. | Oxamyl | 125:1 bis 1:125 | 25:1 bis 1:25 | 5:1 bis 1:5 |
| 84. | Permethrin | 125:1 bis 1:125 | 25:1 bis 1:25 | 5:1 bis 1:5 |
| 85. | Pirimicarb | 125:1 bis 1:125 | 25:1 bis 1:25 | 5:1 bis 1:5 |
| 86. | Profenofos | 125:1 bis 1:125 | 25:1 bis 1:25 | 5:1 bis 1:5 |

(continued)

| Nr. | Mixing partner | Preferred mixing ratio | More preferred mixing ratio | Most preferred mixing ratio |
|---|---|---|---|---|
| 87. | Propargite | 125:1 bis 1:125 | 25:1 bis 1:25 | 5:1 bis 1:5 |
| 88. | Pymetrozine | 125:1 bis 1:125 | 25:1 bis 1:25 | 5:1 bis 1:5 |
| 99. | Pyrafluprole | 125:1 bis 1:125 | 25:1 bis 1:25 | 5:1 bis 1:5 |
| 90. | Pyrethrin | 125:1 bis 1:125 | 25:1 bis 1:25 | 5:1 bis 1:5 |
| 91. | Pyridaben | 125:1 bis 1:125 | 25:1 bis 1:25 | 5:1 bis 1:5 |
| 92. | Pyrifluquinazone | 125:1 bis 1:125 | 25:1 bis 1:25 | 5:1 bis 1:5 |
| 93. | Pyrimethanil | 125:1 bis 1:125 | 25:1 bis 1:25 | 5:1 bis 1:5 |
| 94. | Pyrimidifen | 125:1 bis 1:125 | 25:1 bis 1:25 | 5:1 bis 1:5 |
| 95. | Pyriprole | 125:1 bis 1:125 | 25:1 bis 1:25 | 5:1 bis 1:5 |
| 96. | Pyriproxyfen | 125:1 bis 1:125 | 25:1 bis 1:25 | 5:1 bis 1:5 |
| 97. | Quinalphos | 125:1 bis 1:125 | 25:1 bis 1:25 | 5:1 bis 1:5 |
| 98. | Resmethrin | 125:1 bis 1:125 | 25:1 bis 1:25 | 5:1 bis 1:5 |
| 99. | Spinetoram | 125:1 bis 1:125 | 25:1 bis 1:25 | 5:1 bis 1:5 |
| 100. | Spinosad | 125:1 bis 1:125 | 25:1 bis 1:25 | 5:1 bis 1:5 |
| 101. | Spirodiclofen | 125:1 bis 1:125 | 25:1 bis 1:25 | 5:1 bis 1:5 |
| 102. | Sulfoxaflor | 125:1 bis 1:125 | 25:1 bis 1:25 | 5:1 bis 1:5 |
| 103. | Tau-Fluvalinate | 125:1 bis 1:125 | 25:1 bis 1:25 | 5:1 bis 1:5 |
| 104. | Tebufenpyrad | 125:1 bis 1:125 | 25:1 bis 1:25 | 5:1 bis 1:5 |
| 105. | Teflubenzuron | 125:1 bis 1:125 | 25:1 bis 1:25 | 5:1 bis 1:5 |
| 106. | Tefluthrin | 125:1 bis 1:125 | 25:1 bis 1:25 | 5:1 bis 1:5 |
| 107. | Thiacloprid | 125:1 bis 1:125 | 25:1 bis 1:25 | 5:1 bis 1:5 |
| 108. | Thiamethoxam | 125:1 bis 1:125 | 25:1 bis 1:25 | 5:1 bis 1:5 |
| 109. | Thiodicarb | 125:1 bis 1:125 | 25:1 bis 1:25 | 5:1 bis 1:5 |
| 110. | Trichlorfon | 125:1 bis 1:125 | 25:1 bis 1:25 | 5:1 bis 1:5 |
| 111. | Triflumuron | 125:1 bis 1:125 | 25:1 bis 1:25 | 5:1 bis 1:5 |
| 112. | Zeta-Cypermethrin | 125:1 bis 1:125 | 25:1 bis 1:25 | 5:1 bis 1:5 |
| 113. | 1-(3-chloropyridin-2-yl)-N-[4-cyano-2-methyl-6-(methylcarbamoyl)phenyl]-3-{ [5-(trifluoromethyl)-1H-tetrazol-1-yl]methyl}-1H-pyrazole-5-carboxamide/ 1-(3-chloropyridin-2-yl)-N-[4-cyano-2-methyl-6-(methylcarbamoyl)phenyl]-3-{ [5-(trifluoromethyl)-2H-tetrazol-2-yl]methyl}-1H-pyrazole-5-carboxamide | 125:1 bis 1:125 | 25:1 bis 1:25 | 5:1 bis 1:5 |
| 114. | 2-{ 6-[2-(5-fluoropyridin-3-yl)-1,3-thiazol-5-yl]pyridin-2-yl}pyrimidine | 125:1 bis 1:125 | 25:1 bis 1:25 | 5:1 bis 1:5 |

(continued)

| Nr. | Mixing partner | Preferred mixing ratio | More preferred mixing ratio | Most preferred mixing ratio |
|---|---|---|---|---|
| 115. | 2-{6-[2-(pyridin-3-yl)-1,3-thiazol-5-yl]pyridin-2-yl} pyrimidine | 125:1 bis 1:125 | 25:1 bis 1:25 | 5:1 bis 1:5 |
| 116. | Metarhizium anisopliae F52 | 100:1 bis 1:2000 | 50:1 bis 1:1000 | 25:1 bis 1:200 |
| 117 | Metschnikowia fructicola | 100:1 bis 1:2000 | 50:1 bis 1:1000 | 25:1 bis 1:200 |
| 118. | Paecilomyces lilacinus 251 | 100:1 bis 1:2000 | 50:1 bis 1:1000 | 25:1 bis 1:200 |
| 119. | Azadirachtin | 125:1 bis 1:125 | 25:1 bis 1:25 | 5:1 bis 1:5 |
| 120. | Pyrethrum | 625:1 bis 1:625 | 125:1 bis 1:125 | 25:1 bis 1:25 |
| 121. | (1E)-N-[(6-chloropyridin-3-yl) methyl]-N'-cyano-N-(2,2-difluoroethyl) ethanimidamide | 125:1 bis 1:125 | 25:1 bis 1:25 | 5:1 bis 1:5 |
| 122 | Harpin-Protein | 125:1 bis 1:125 | 25:1 bis 1:25 | 5:1 bis 1:5 |
| 123 | Cydia pomonella granulosis virus (CpGV) | 100:1 bis 1:2000 | 50:1 bis 1:1000 | 25:1 bis 1:200 |
| 124 | Thymol | 625:1 bis 1:625 | 125:1 bis 1:125 | 25:1 bis 1:25 |

The active ingredient combinations according to the invention, in combination with good plant tolerance and favourable toxicity to warm-blooded animals and being tolerated well by the environment, are suitable for protecting plants and plant organs, for increasing harvest yields, for improving the quality of the harvested material and for controlling animal pests, in particular insects, arachnids, helminths, nematodes and molluscs, which are encountered in agriculture, in horticulture, in animal husbandry, in forests, in gardens and leisure facilities, in protection of stored products and of materials, and in the hygiene sector. They can be preferably used as plant protection agents. They are active against normally sensitive and resistant species and against all or some stages of development. The abovementioned pests include:

pests from the phylum Arthropoda, especially from the class Arachnida, for example, Acarus spp., Aceria sheldoni, Aculops spp., Aculus spp., Amblyomma spp., Amphitetranychus viennensis, Argas spp., Boophilus spp., Brevipalpus spp., Bryobia graminum, Bryobia praetiosa, Centruroides spp., Chorioptes spp., Dermanyssus gallinae, Dermatophagoides pteronyssinus, Dermatophagoides farinae, Dermacentor spp., Eotetranychus spp., Epitrimerus pyri, Eutetranychus spp., Eriophyes spp., Glycyphagus domesticus, Halotydeus destructor, Hemitarsonemus spp., Hyalomma spp., Ixodes spp., Latrodectus spp., Loxosceles spp., Metatetranychus spp., Neutrombicula autumnalis, Nuphersa spp., Oligonychus spp., Ornithodorus spp., Ornithonyssus spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Steneotarsonemus spp., Steneotarsonemus spinki, Tarsonemus spp., Tetranychus spp., Trombicula alfreddugesi, Vaejovis spp., Vasates lycopersici;

from the class Chilopoda, for example, Geophilus spp., Scutigera spp.;

from the order or the class Collembola, for example, Onychiurus armatus;

from the class Diplopoda, for example, Blaniulus guttulatus;

from the class Insecta, e.g. from the order Blattodea, for example, Blattella asahinai, Blattella germanica, Blatta orientalis, Leucophaea maderae, Panchlora spp., Parcoblatta spp., Periplaneta spp., Supella longipalpa;

from the order Coleoptera, for example, Acalymma vittatum, Acanthoscelides obtectus, Adoretus spp., Agelastica alni, Agriotes spp., Alphitobius diaperinus, Amphimallon solstitialis, Anobium punctatum, Anoplophora spp., Anthonomus spp., Anthrenus spp., Apion spp., Apogonia spp., Atomaria spp., Attagenus spp., Bruchidius obtectus,

Bruchus spp., Cassida spp., Cerotoma trifurcata, Ceutorrhynchus spp., Chaetocnema spp., Cleonus mendicus, Conoderus spp., Cosmopolites spp., Costelytra zealandica, Ctenicera spp., Curculio spp., Cryptolestes ferrugineus, Cryptorhynchus lapathi, Cylindrocopturus spp., Dermestes spp., Diabrotica spp., Dichocrocis spp., Dicladispa armigera, Diloboderus spp., Epilachna spp., Epitrix spp., Faustinus spp., Gibbium psylloides, Gnathocerus cornutus, Hellula undalis, Heteronychus arator, Heteronyx spp., Hylamorpha elegans, Hylotrupes bajulus, Hypera postica, Hypomeces squamosus, Hypothenemus spp., Lachnosterna consanguinea, Lasioderma serricorne, Latheticus oryzae, Lathridius spp., Lema spp., Leptinotarsa decemlineata, Leucoptera spp., Lissorhoptrus oryzophilus, Lixus spp., Luperodes spp., Lyctus spp., Megascelis spp., Melanotus spp., Meligethes aeneus, Melolontha spp., Migdolus spp., Monochamus spp., Naupactus xanthographus, Necrobia spp., Niptus hololeucus, Oryctes rhinoceros, Oryzaephilus surinamensis, Oryzaphagus oryzae, Otiorrhynchus spp., Oxycetonia jucunda, Phaedon cochleariae, Phyllophaga spp., Phyllophaga helleri, Phyllotreta spp., Popillia japonica, Premnotrypes spp., Prostephanus truncatus, Psylliodes spp., Ptinus spp., Rhizobius ventralis, Rhizopertha dominica, Sitophilus spp., Sitophilus oryzae, Sphenophorus spp., Stegobium paniceum, Sternechus spp., Symphyletes spp., Tanymecus spp., Tenebrio molitor, Tenebrioides mauretanicus, Tribolium spp., Trogoderma spp., Tychius spp., Xylotrechus spp., Zabrus spp.;

from the order Diptera, for example, Aedes spp., Agromyza spp., Anastrepha spp., Anopheles spp., Asphondylia spp., Bactrocera spp., Bibio hortulanus, Calliphora erythrocephala, Calliphora vicina, Ceratitis capitata, Chironomus spp., Chrysomyia spp., Chrysops spp., Chrysozona pluvialis, Cochliomyia spp., Contarinia spp., Cordylobia anthropophaga, Cricotopus sylvestris, Culex spp., Culicoides spp., Culiseta spp., Cuterebra spp., Dacus oleae, Dasyneura spp., Delia spp., Dermatobia hominis, Drosophila spp., Echinocnemus spp., Fannia spp., Gasterophilus spp., Glossina spp., Haematopota spp., Hydrellia spp., Hydrellia griseola, Hylemya spp., Hippobosca spp., Hypoderma spp., Liriomyza spp., Lucilia spp., Lutzomyia spp., Mansonia spp., Musca spp., Oestrus spp., Oscinella frit, Paratanytarsus spp., Paralauterborniella subcincta, Pegomyia spp., Phlebotomus spp., Phorbia spp., Phormia spp., Piophila casei, Prodiplosis spp., Psila rosae, Rhagoletis spp., Sarcophaga spp., Simulium spp., Stomoxys spp., Tabanus spp., Tetanops spp., Tipula spp.;

from the order Heteroptera, for example, Anasa tristis, Antestiopsis spp., Boisea spp., Blissus spp., Calocoris spp., Campylomma livida, Cavelerius spp., Cimex spp., Collaria spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptocorisa varicornis, Leptoglossus phyllopus, Lygus spp., Macropes excavatus, Miridae, Monalonion atratum, Nezara spp., Oebalus spp., Pentomidae, Piesma quadrata, Piezodorus spp., Psallus spp., Pseudacysta persea, Rhodnius spp., Sahlbergella singularis, Scaptocoris castanea, Scotinophora spp., Stephanitis nashi, Tibraca spp., Triatoma spp.;

from the order Homoptera, for example, Acizzia acaciaebaileyanae, Acizzia dodonaeae, Acizzia uncatoides, Acrida turrita, Acyrthosipon spp., Acrogonia spp., Aeneolamia spp., Agonoscena spp., Aleyrodes proletella, Aleurolobus barodensis, Aleurothrixus floccosus, Allocaridara malayensis, Amrasca spp., Anuraphis cardui, Aonidiella spp., Aphanostigma piri, Aphis spp., Arboridia apicalis, Arytainilla spp., Aspidiella spp., Aspidiotus spp., Atanus spp., Aulacorthum solani, Bemisia tabaci, Blastopsylla occidentalis, Boreioglycaspis melaleucae, Brachycaudus helichrysi, Brachycolus spp., Brevicoryne brassicae, Cacopsylla spp., Calligypona marginata, Carneocephala fulgida, Ceratovacuna lanigera, Cercopidae, Ceroplastes spp., Chaetosiphon fragaefolii, Chionaspis tegalensis, Chlorita onukii, Chondracris rosea, Chromaphis juglandicola, Chrysomphalus ficus, Cicadulina mbila, Coccomytilus halli, Coccus spp., Cryptomyzus ribis, Cryptoneossa spp., Ctenarytaina spp., Dalbulus spp., Dialeurodes citri, Diaphorina citri, Diaspis spp., Drosicha spp., Dysaphis spp., Dysmicoccus spp., Empoasca spp., Eriosoma spp., Erythroneura spp., Eucalyptolyma spp., Euphyllura spp., Euscelis bilobatus, Ferrisia spp., Geococcus coffeae, Glycaspis spp., Heteropsylla cubana, Heteropsylla spinulosa, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Macrosteles facifrons, Mahanarva spp., Melanaphis sacchari, Metcalfiella spp., Metopolophium dirhodum, Monellia costalis, Monelliopsis pecanis, Myzus spp., Nasonovia ribisnigri, Nephotettix spp., Nettigoniclla spectra, Nilaparvata lugens, Oncometopia spp., Orthezia praelonga, Oxya chinensis, Pachypsylla spp., Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Prosopidopsylla flava, Protopulvinaria pyriformis, Pseudaulacaspis pentagona, Pseudococcus spp., Psyllopsis spp., Psylla spp., Pteromalus spp., Pyrilla spp., Quadraspidiotus spp., Quesada gigas, Rastrococcus spp., Rhopalosiphum spp., Saissetia spp., Scaphoideus titanus, Schizaphis graminum, Selenaspidus articulatus, Sogata spp., Sogatella furcifera, Sogatodes spp., Stictocephala festina, Siphoninus phillyreae, Tenalaphara malayensis, Tetragonocephela spp., Tinocallis caryaefoliae, Tomaspis spp., Toxoptera spp., Trialeurodes vaporariorum, Trioza spp., Typhlocyba spp., Unaspis spp., Viteus vitifolii, Zygina spp.;

from the order Hymenoptera, for example, Acromyrmex spp., Athalia spp., Atta spp., Diprion spp., Hoplocampa spp., Lasius spp., Monomorium pharaonis, Sirex spp., Solenopsis invicta, Tapinoma spp., Urocerus spp., Vespa spp., Xeris spp.;

from the order Isopoda, for example, Armadillidium vulgare, Oniscus asellus, Porcellio scaber;

from the order Isoptera, for example, Coptotermes spp., Cornitermes cumulans, Cryptotermes spp., Incisitermes spp., Microtermes obesi, Odontotermes spp., Reticulitermes spp.;

from the order Lepidoptera, for example, Achroia grisella, Acronicta major, Adoxophyes spp., Aedia leucomelas, Agrotis spp., Alabama spp., Amyelois transitella, Anarsia spp., Anticarsia spp., Argyroploce spp., Barathra brassicae, Borbo cinnara, Bucculatrix thurberiella, Bupalus piniarius, Busseola spp., Cacoecia spp., Caloptilia theivora, Capua reticulana, Carpocapsa pomonella, Carposina niponensis, Cheimatobia brumata, Chilo spp., Choristoneura spp., Clysia ambiguella, Cnaphalocerus spp., Cnaphalocrocis medinalis, Cnephasia spp., Conopomorpha spp., Conotrachelus spp., Copitarsia spp., Cydia spp., Dalaca noctuides, Diaphania spp., Diatraea saccharalis, Earias spp., Ecdytolopha aurantium, Elasmopalpus lignosellus, Eldana saccharina, Ephestia spp., Epinotia spp., Epiphyas postvittana, Etiella spp., Eulia spp., Eupoecilia ambiguella, Euproctis spp., Euxoa spp., Feltia spp., Galleria mellonella, Gracillaria spp., Grapholitha spp., Hedylepta spp., Helicoverpa spp., Heliothis spp., Hofmannophila pseudospretella, Homoeosoma spp., Homona spp., Hyponomeuta padella, Kakivoria flavofasciata, Laphygma spp., Laspeyresia molesta, Leucinodes orbonalis, Leucoptera spp., Lithocolletis spp., Lithophane antennata, Lobesia spp., Loxagrotis albicosta, Lymantria spp., Lyonetia spp., Malacosoma neustria, Maruca testulalis, Mamstra brassicae, Melanitis leda, Mocis spp., Monopis obviella, Mythimna separata, Nemapogon cloacellus, Nymphula spp., Oiketicus spp., Oria spp., Orthaga spp., Ostrinia spp., Oulema oryzae, Panolis flammea, Parnara spp., Pectinophora spp., Perileucoptera spp., Phthorimaea spp., Phyllocnistis citrella, Phyllonorycter spp., Pieris spp., Platynota stultana, Plodia interpunctella, Plusia spp., Plutella xylostella, Prays spp., Prodenia spp., Protoparce spp., Pseudaletia spp., Pseudaletia unipuncta, Pseudoplusia includens, Pyrausta nubilalis, Rachiplusia nu, Schoenobius spp., Scirpophaga spp., Scirpophaga innotata, Scotia segetum, Sesamia spp., Sesamia inferens, Sparganothis spp., Spodoptera spp., Spodoptera praefica, Stathmopoda spp., Stomopteryx subsecivella, Synanthedon spp., Tecia solanivora, Thermesia gemmatalis, Tinea cloacella, Tinea pellionella, Tineola bisselliella, Tortrix spp., Trichophaga tapetzella, Trichoplusia spp., Tryporyza incertulas, Tuta absoluta, Virachola spp.;

from the order Orthoptera or Saltatoria, for example, Acheta domesticus, Dichroplus spp., Gryllotalpa spp., Hieroglyphus spp., Locusta spp., Melanoplus spp., Schistocerca gregaria;

from the order Phthiraptera, for example, Damalinia spp., Haematopinus spp., Linognathus spp., Pediculus spp., Ptirus pubis, Trichodectes spp.;

from the order Psocoptera for example Lepinatus spp., Liposcelis spp.;

from the order Siphonaptera, for example, Ceratophyllus spp., Ctenocephalides spp., Pulex irritans, Tunga penetrans, Xenopsylla cheopsis;

from the order Thysanoptera, for example, Anaphothrips obscurus, Baliothrips biformis, Drepanothrips reuteri, Enneothrips flavens, Frankliniella spp., Heliothrips spp., Hercinothrips femoralis, Rhipiphorothrips cruentatus, Scirtothrips spp., Taeniothrips cardamomi, Thrips spp.;

from the order Zygentoma (=Thysanura), for example, Ctenolepisma spp., Lepisma saccharina, Lepismodes inquilinus, Thermobia domestica;

from the class Symphyla, for example, Scutigerella spp.;

pests from the phylum Mollusca, especially from the class Bivalvia, for example, Dreissena spp., and from the class Gastropoda, for example, Arion spp., Biomphalaria spp., Bulinus spp., Deroceras spp., Galba spp., Lymnaea spp., Oncomelania spp., Pomacea spp., Succinea spp.;

animal pests from the phylums Plathelminthes and Nematoda, for example, Ancylostoma duodenale, Ancylostoma ceylanicum, Acylostoma braziliensis, Ancylostoma spp., Ascaris spp., Brugia malayi, Brugia timori, Bunostomum spp., Chabertia spp., Clonorchis spp., Cooperia spp., Dicrocoelium spp., Dictyocaulus filaria, Diphyllobothrium latum,

Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp., Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti;

phytoparasitic pests from the phylum Nematoda, for example, Aphelenchoides spp., Bursaphelenchus spp., Ditylenchus spp., Globodera spp., Heterodera spp., Longidorus spp., Meloidogyne spp., Pratylenchus spp., Radopholus spp., Trichodorus spp., Tylenchulus spp., Xiphinema spp., Helicotylenchus spp., Tylenchorhynchus spp., Scutellonema spp., Paratrichodorus spp., Meloinema spp., Paraphelenchus spp., Aglenchus spp., Belonolaimus spp., Nacobbus spp., Rotylenchulus spp., Rotylenchus spp., Neotylenchus spp., Paraphelenchus spp., Dolichodorus spp., Hoplolaimus spp., Punctodera spp., Criconemella spp., Quinisulcius spp., Hemicycliophora spp., Anguina spp., Subanguina spp., Hemicriconemoides spp., Psilenchus spp., Pseudohalenchus spp., Criconemoides spp., Cacopaurus spp.

It is furthermore possible to control organisms from the subphylum Protozoa, especially from the order Coccidia, such as Eimeria spp.

The active ingredient combinations can be converted to the customary formulations, such as solutions, emulsions, wettable powders, suspensions, powders, dusts, pastes, soluble powders, granules, suspoemulsion concentrates, natural products impregnated with active ingredient, synthetic substances impregnated with active ingredient, and also microencapsulations in polymeric substances.

These formulations are produced in a known manner, for example by mixing the active ingredients with extenders, i.e. liquid solvents, and/or solid carriers, optionally with the use of surfactants, i.e. emulsifiers and/or dispersants, and/or foam formers.

If the extender used is water, it is also possible to use, for example, organic solvents as auxiliary solvents. Useful liquid solvents essentially include: aromatics such as xylene, toluene or alkylnaphthalenes, chlorinated aromatics and chlorinated aliphatic hydrocarbons such as chlorobenzenes, chloroethylenes or methylene chloride, aliphatic hydrocarbons such as cyclohexane or paraffins, for example mineral oil fractions, mineral and vegetable oils, alcohols such as butanol or glycol and their ethers and esters, ketones such as acetone, methyl ethyl ketone, methyl isobutyl ketone or cyclohexanone, strongly polar solvents such as dimethylformamide and dimethyl sulfoxide, and also water.

Useful solid carriers include:

for example ammonium salts and ground natural minerals, such as kaolins, clays, talc, chalk, quartz, attapulgite, montmorillonite or diatomaceous earth, and ground synthetic minerals, such as finely divided silica, alumina and silicates; suitable solid carriers for granules are for example crushed and fractionated natural rocks, such as calcite, marble, pumice, sepiolite, dolomite and synthetic granules of inorganic and organic meals, and granules of organic material, such as sawdust, coconut shells, maize cobs and tobacco stalks; suitable emulsifiers and/or foam formers are for example nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates and protein hydrolysates; suitable dispersants are for example lignosulphite waste liquors and methylcellulose.

In the formulations it is possible to use tackifiers such as carboxymethylcellulose, natural and synthetic polymers in the form of powders, granules or latices, such as gum arabic, polyvinyl alcohol and polyvinyl acetate, or else natural phospholipids such as cephalins and lecithins and synthetic phospholipids. Further additives may be mineral and vegetable oils.

It is possible to use dyes such as inorganic pigments, for example iron oxide, titanium oxide and Prussian Blue, and organic dyes such as alizarin dyes, azo dyes and metal phthalocyanine dyes, and trace nutrients such as salts of iron, manganese, boron, copper, cobalt, molybdenum and zinc.

The formulations contain generally between 0.1 and 95% by weight of active ingredient, preferably between 0.5 and 90%.

The inventive active ingredient combinations may be present in commercially available formulations and in the use forms, prepared from these formulations, as a mixture with other active ingredients, such as insecticides, attractants, sterilants, bactericides, acaricides, nematicides, fungicides, growth regulators or herbicides. The insecticides include, for example, phosphoric esters, carbamates, carboxylic esters, chlorinated hydrocarbons, phenylureas, substances produced by microorganisms, etc.

A mixture with other known active ingredients, such as herbicides, or with fertilizers and growth regulators, is also possible.

When used as insecticides, the inventive active ingredient combinations may also be present in their commercially available formulations and in the use forms, prepared from these formulations, as a mixture with synergists.

Synergists are compounds which enhance the action of the active ingredients, without any need for the synergist added to be active itself.

The active ingredient content of the use forms prepared from the commercially available formulations may vary within wide limits. The active ingredient concentration of the application forms may be from 0.0000001 to 95% by weight of active ingredient, preferably between 0.0001 and 1% by weight.

The compounds are applied in a customary manner appropriate for the use forms.

All plants and plant parts can be treated in accordance with the invention. Plants are understood here to mean all plants and plant populations, such as desired and undesired wild plants or crop plants (including naturally occurring crop plants). Crop plants may be plants which can be obtained by conventional breeding and optimization methods or by biotechnological and genetic engineering methods or combinations of these methods, including the transgenic plants and including the plant varieties which are protectable and non-protectable by plant breeders' rights. Plant parts are understood to mean all parts and organs of plants above and below the ground, such as shoot, leaf, flower and root, examples of which include leaves, needles, stalks, stems, flowers, fruit bodies, fruits, seeds, roots, tubers and rhizomes. The plant parts also include harvested material and vegetative and generative propagation material, for example cuttings, tubers, rhizomes, slips and seeds.

The inventive treatment of the plants and plant parts with the active ingredient combinations is effected directly or by allowing them to act on the surroundings, habitat or storage space thereof by the customary treatment methods, for example by dipping, spraying, vaporizing, pouring on, nebulizing, scattering, painting on, and, in the case of propagation material, especially in the case of seeds, also by applying one or more coats.

As already mentioned above, it is possible to treat all plants and their parts in accordance with the invention. In a preferred embodiment, wild plant species and plant cultivars, or those obtained by conventional biological breeding methods, such as crossing or protoplast fusion, and also parts thereof, are treated. In a further preferred embodiment, transgenic plants and plant cultivars obtained by genetical engineering, if appropriate in combination with conventional methods (Genetically Modified Organisms), and parts thereof are treated. The term "parts" or "parts of plants" or "plant parts" has been explained above.

More preferably, plants of the plant cultivars which are each commercially available or in use are treated in accordance with the invention.

Depending on the plant species or plant cultivars, and the location and growth conditions (soils, climate, vegetation period, diet) thereof, the inventive treatment may also result in superadditive ("synergistic") effects. For example, possibilities include reduced application rates and/or broadening of the activity spectrum and/or an increase in the activity of the compounds and compositions usable in accordance with the invention, better plant growth, increased tolerance to high or low temperatures, increased tolerance to drought or to levels of water or soil salinity, enhanced flowering performance, easier harvesting, accelerated ripening, higher yields, higher quality and/or higher nutritional value of the harvested products, increased storage life and/or processibility of the harvested products, which exceed the effects normally to be expected.

The transgenic plants or plant cultivars (those obtained by genetic engineering) which are to be treated with preference in accordance with the invention include all plants which, through the genetic modification, received genetic material which imparts particular advantageous useful properties ("traits") to these plants. Examples of such properties are better plant growth, increased tolerance to high or low temperatures, increased tolerance to drought or to levels of water or soil salinity, enhanced flowering performance, easier harvesting, accelerated ripening, higher yields, higher quality and/or a higher nutritional value of the harvested products, better storage life and/or processibility of the harvested products. Further and particularly emphasized examples of such properties are an improved defence of the plants against animal and microbial pests, such as against insects, mites, phytopathogenic fungi, bacteria and/or viruses, and also increased tolerance of the plants to certain herbicidally active ingredients. Examples of transgenic plants which may be mentioned are the important crop plants, such as cereals (wheat, rice), maize, soya beans, potatoes, cotton, oilseed rape and also fruit plants (with the fruits apples, pears, citrus fruits and grapes), and particular emphasis is given to maize, soya beans, potatoes, cotton and oilseed rape. Traits that are emphasized are in particular increased defence of the plants against insects by toxins formed in the plants, in particular those formed in the plants by the genetic material from Bacillus thuringiensis (for example by the genes CryIA(a), CryIA(b), CryIA(c), CryIIA, CryIIIA, CryIIIB2, Cry9c Cry2Ab, Cry3Bb and CryIF and also combinations thereof) (hereinbelow referred to as "Bt plants"). Traits that are additionally particularly emphasized are the increased tolerance of the plants to certain active herbicidal ingredients, for example imidazolinones, sulphonylureas, glyphosate or phosphinothricin (for example the "PAT" gene). The genes which impart the desired traits in question may also be present in combinations with one another in the transgenic plants. Examples of "Bt plants" include maize varieties, cotton varieties, soya varieties and potato varieties which are sold under the trade names YIELD GARD® (for example maize, cotton, soya), KnockOut® (for example maize), StarLink® (for example maize), Bollgard® (cotton), Nucotn® (cotton) and NewLeaf® (potato). Examples of herbicide-tolerant plants include maize varieties, cotton varieties and soya varieties which are sold under the trade names Roundup Ready® (tolerance to glyphosate, for example maize, cotton, soya), Liberty Link® (tolerance to phosphinothricin, for example

oilseed rape), IMI® (tolerance to imidazolinones) and STS® (tolerance to sulphonylureas, for example maize). Herbicide-resistant plants (plants bred in a conventional manner for herbicide tolerance) also include the varieties sold under the Clearfield® name (for example maize). Of course, these statements also apply to plant cultivars which have these genetic traits or genetic traits which are still to be developed and will be developed and/or marketed in the future.

The plants listed can be treated according to the invention in a particularly advantageous manner with the active compound mixture according to the invention. The preferred ranges stated above for the mixtures also apply to the treatment of these plants. Particular emphasis is given to the treatment of plants with the mixtures specifically mentioned in the present text.

Using a compound of formula (I) and at least one biological control agent selected from bacteria, in particular spore-forming bacteria, fungi or yeasts, protozoas, viruses, and entomopathogenic nematodes and optionally an inoculant, as a combination is particularly suitable for treating seed. A large part of the damage to crop plants caused by harmful agricultural pests and/or plant diseases is triggered by an infection of the seed during storage or after sowing as well as during and after germination of the plant. This phase is particularly critical since the roots and shoots of the growing plant are particularly sensitive, and even small damage may result in a weak plant (unhealthy plant), reduced yield and even in the death of the plant.

The control of pests and/or phytopathogens by treating the seed of plants has been known for a long time and is the subject of continuous improvements. However, the treatment of seed entails a series of problems which cannot always be solved in a satisfactory manner. Thus, it is desirable to develop methods for protecting the seed and the germinating plant which dispense with the additional application of crop protection agents after sowing or after the emergence of the plants or which at least considerably reduce additional application. It is furthermore desirable to optimize the amount of agrochemicals employed in such a way as to provide maximum protection for the seed and the germinating plant from attack by agricultural pests, but without damaging the plant itself by the active compound employed. In particular, methods for the treatment of seed should also take into consideration the intrinsic insecticidal properties of plants in order to achieve optimum protection of the seed and the germinating plant with a minimum of agrochemicals being employed.

As already mentioned, the compound of formula (I) and the biological control agent selected from bacteria, in particular spore-forming bacteria, fungi or yeasts, protozoas, viruses, and entomopathogenic nematodes and optionally an inoculant can be employed or used according to the invention as a solo- or a combined-formulation. Such formulations may include agriculturally suitable auxiliaries, solvents, carriers, surfactants and/or extenders.

According to the invention biological control agents which are summarized under the term "bacteria" include spore-forming, root-colonizing bacteria, or bacteria useful as biofungicide. Examples of such bacteria to be used or employed according to the invention are:

(1.1) Bacillus agri, (1.2) Bacillus aizawai, (1.3) Bacillus albolactis, (1.4) Bacillus amyloliquefaciens, in particular the strain IN937a, or strain FZB42 (product known as RhizoVital®), (1.5) Bacillus cereus, in particular spores of Bacillus cereus strain CNCM I-1562 (cf. US 6,406,690), (1.6) Bacillus coagulans, (1.7) Bacillus endoparasiticus, (1.8) Bacillus endorhythmos, (1.9) Bacillus azotoformans, (1.10) Bacillus kurstaki, (1.11) Bacillus lacticola, (1.12) Bacillus lactimorbus, (1.13) Bacillus lactis, (1.14) Bacillus laterosporus, (1.15) Bacillus lentimorbus, (1.16) Bacillus licheniformis, (1.17) Bacillus medusa, (1.18) Bacillus megaterium, (1.19) Bacillus metiens, (1.20) Bacillus natto, (1.21) Bacillus nigrificans, (1.22) Bacillus popillae, (1.23) Bacillus pumilus, in particular strain GB34 (products known as Yield Shield®, Sonata QST 2808®), (1.24) Bacillus siamensis, (1.25) Bacillus sphaericus (products known as VectoLexs®), (1.26) Bacillus subtilis, in particular strain GB03 (products known as Kodiak®) and strain QST 713 (products known as Serenade QST 713®), or Bacillus subtilis var. amyloliquefaciens strain FZB24 (products known as Taegro®), (1.27) Bacillus thuringiensis, in particular Bacillus thuringiensis var. israelensis (products known as VectoBac®) or Bacillus thuringiensis subsp. aizawai strain ABTS-1857 (products known as XenTari®), or Bacillus thuringiensis subsp. kurstaki strain HD-1 (products known as Dipel® ES) or Bacillus thuringiensis subsp. tenebrionis strain NB 176 (products known as Novodor® FC), (1.28) Bacillus uniflagellatus, (1.29) Delftia acidovorans, in particular strain RAY209 (products known as BioBoost®), (1.30) Lysobacter antibioticus, in particular strain 13-1 (cf. Biological Control 2008, 45, 288-296), (1.31) Pasteuria penetrans, (1.32) Pseudomonas chlororaphis, in particular strain MA 342 (products known as Cedomon), (1.33) Pseudomonas proradix (products known as Proradix®), (1.34) Streptomyces galbus, in particular strain K61 (products known as Mycostop®, cf. Crop Protection 2006, 25, 468-475), (1.35) Streptomyces griseoviridis (products known as Mycostop®), (1.36) Bacillus lautus, (1.37) Bacillus atrophaeus, (1.38) Bacillus anthracis, (1.39) Bacillus mycoides, (1.40) Bacillus acidoterrestris, (1.41) Bacillus fastidiosus, (1.42) Bacillus megaterium, (1.43) Bacillus psychrosaccharolyticus, (1.44) Bacillus maroccanus, (1.45) Bacillus megaterium C, (1.46) Bacillus pantothenticus, (1.47) Bacillus lentus, (1.48) Bacillus badius, (1.49) Bacillus smithi and (1.50) Bacillus firmus, in particular strain I-1582.

Bacillus (abbreviation: B.) is a genus of rod-shaped, gram-positive bacteria, which can produce endospores

under stressful environmental conditions. The single species of this genus differ strongly with respect to their useability in the area of plant protection. *Bacillus firmus*, strain I-1582, is known as nematicide with a high potential to increase plant growth and health. It can be used for soil application and seed treatment.

*Bacillus subtilis*, for example the strains GB03 and QST 713, as well as *Bacillus amyloliquefaciens*, strain FZB 24 and 42, are species with phytopathogenic properties. These bacteria are applied to the soil and/or to the leaves.

*Bacillus thuringiensis* with its different subspecies produces endotoxin containing crystals which have high insect pathogenic specifity. *Bacillus thuringiensis* subsp. *kurstaki*, strain HD-1, is used for control of lepidopteran larvae, but without noctuidae. *Bacillus thuringiensis* subsp. *aizawai*, for example the strains SAN 401 I, ABG-6305 and ABG-6346, is effective against different lepidopteran species including also noctuidae. *Bacillus thuringiensis* subsp. *tenebrionis*, for example the strains SAN 418 I and ABG-6479, protects plants against leaf beetle larvae. *Bacillus thuringiensis* subsp. *israelensis*, for example the strains SAN 402 I and ABG-6164, is applied against larvae of various dipteran pests, e.g. mosquitoes and nematoceres.

From the given bacteria (1.1) to (1.50), such bacteria or mutants thereof that have an insecticidal or plant growth promoting activity are preferred to be used or employed in the present invention, in one embodiment in combination with compound (I), optionally in the presence of an inoculant.

From the given bacteria (1.1) to (1.50), such bacteria or mutants thereof that have a fungicidal activity are preferred to be used or employed in the present invention, in one embodiment in combination with compound (I), optionally in the presence of an inoculant.

In one embodiment, from the given bacteria (1.1) to (1.50), the bacteria given under the numbers (1.4), (1.5), (1.6), (1.15), (1.16), (1.17), (1.22), (1.23), (1.26), (1.27), (1.50) and (1.36) to (1.45) are to be used or employed in the present invention, such as in combination with compound (I), optionally in the presence of an inoculant. These bacteria belong to the class of group 1 bacteria as disclosed in Ash et al., 1991, Lett Appl Microbiology 13, 202-206. The genealogy of group 1 bacteria is also shown in Figure 1. Notably, Group 1 bacteria can be divided into subgroups depending on the ramification within the group. Thus, subgroup (1) consists of *B. pantothenticus, B, lentus, B. badius,* and *B. smithi;* subgroup (2) consists of *B. azotoformans,, B. firmus, B. circulans, B.benzoevorans, B. simplex, B. marrocanus, B. psychrosaccharolyticus, B. megaterium* and *B. fastidiosus;* and subgroup (3) consists of *B. lautus, B. licheniformis, B. subtilis, B. amyloliquifaciens, B. lentimorbus, B. popilliae, B. atrophaeus, B. pumilus, B. cereus, B. anthracis, B. thuringiensis, B. medusa, B. mycoides, B. coagulans,* and *B. acidoterrestris.* Subgroup (3) can be further divided into subgroup (3a) consisting of *B. lautus, B. licheniformis, B. subtilis, B. amyloliquifaciens, B. lentimorbus, B. popilliae,* and *B. atrophaeus;* subgroup (3b) consisting of *B. pumilus, B. cereus, B. anthracis, B. thuringiensis, B. medusa,* and *B. mycoides*; and subgroup (3c) consisting of *B. coagulans*, and *B. acidoterrestris*. Subgroup (4) consists of *B. firmus*.

In one embodiment, the bacteria of subgroup (3), (3a), (3b) or (3c) or (4) are to be used or employed in the present invention, such as in combination with compound (I), optionally in the presence of an inoculant.

In another embodiment, the bacteria of subgroup (1) are to be used or employed in the present invention, such as in combination with compound (I), optionally in the presence of an inoculant.

In another embodiment, the bacteria given under the numbers (1.4), (1.5), (1.23), and (1.26) are to be used or employed in the present invention, such as in combination with compound (I), optionally in the presence of an inoculant.

From the given bacteria (1.4), the bacteria (1.4a) *Bacillus amyloliquefaciens* strain IN937a, and (1.4b) *Bacillus amyloliquefaciens* strain FZB42 are used or employed in the present invention, in one embodiment in combination with compound (I), optionally in the presence of an inoculant.

From the given bacteria (1.5), the bacterium (1.5a) *Bacillus cereus* strain CNCM I-1562 especially spores are used or employed in the present invention, in one embodiment in combination with compound (I), optionally in the presence of an inoculant.

From the given bacteria (1.23), the bacterium (1.23a) *Bacillus pumilus* strain GB34 is used or employed in the present invention, in one embodiment in combination with compound (I), optionally in the presence of an inoculant.

From the given bacteria (1.26), the bacteria (1.26a) *Bacillus subtilis* strain GB03 and (1.26b) *Bacillus subtilis var. amyloliquefaciens* strain FZB24 are used or employed in the present invention in one embodiment in combination with compound (I), optionally in the presence of an inoculant.

From the given bacteria (1.27), the bacteria (1.27a) *Bacillus thuringiensis subsp. tenebrionis NB 176*, (1.27b) *Bacillus thuringiensis subsp. aizawaii strain ABTS-1857*, (1.27c) *Bacillus thuringiensis subsp. israelensis strain AM 65-52* and (1.27d) *Bacillus thuriningiensis* subsp. *kurstaki* HD-1 are used or employed in the present invention in one embodiment in combination with compound (I), optionally in the presence of an inoculant.

In another embodiment, the bacteria of subgroup (4) are to be used or employed in the present invention, such as in combination with compound (I), optionally in the presence of an inoculant.

From the given bacteria (1.50), the bacterium (1.50a) *Bacillus firmus* strain I-1582 especially spores are used or employed in the present invention, in one embodiment in combination with compound (I), optionally in the presence of an inoculant.

According to the invention biological control agents that are summarized under the term "fungi" or "yeasts" are:

*(2.1) Ampelomyces quisqualis,* in particular strain AQ 10 (product known as AQ 10®), (2.2) *Aureobasidium pullulans,* in particular blastospores of strain DSM14940 or blastospores of strain DSM 14941 or mixtures thereof (product known as Blossom Protect®), (2.3) *Beauveria bassiana,* in particular strain ATCC 74040 (products known as Naturalis®), (2.4) *Candida oleophila*, in particular strain O (products known as Nexy ®), (2.6) *Coniothyrium minitans*, in particular strain CON/M/91-8 (products known as Contans ®), (2.7) *Dilophosphora alopecuri* (products known as Twist Fungus ®), (2.8) *Gliocladium catenulatum*, in particular strain J1446 (products known as Prestop ®), (2.9) *Lecanicillium lecanii* (formerly known as *Verticillium lecanii*), in particular conidia of strain KV01 (products known as Mycotal®, Vertalec®), (2.10) *Metarhizium anisopliae*, in particular strain F52 (products known as BIO 1020), (2.11) *Metschnikovia fructicola*, in particular the strain NRRL Y-30752 (products known as Shemer ®), (2.12) *Microsphaeropsis ochracea* (products known as Microx ®), (2.13) *Muscodor albus*, in particular strain QST 20799 (products known as QRD300), (2.14) *Nomuraea rileyi*, in particular strains SA86101, GU87401, SR86151, CG128 and VA9101, (2.15) *Paecilomyces lilacinus*, in particular spores of P. *Lilacinus strain* 251 (products known as BioAct®, cf. Crop Protection 2008, 27, 352-361), or *Paecilomyces fumosoroseus*, (2.16) *Penicillium bilaii*, in particular strain ATCC22348 (products known as JumpStart®, PB-50, Provide), (2.17) *Pichia anomala*, in particular strain WRL-076, (2.18) *Pseudozyma flocculosa*, in particular strain PF-A22 UL (products known as Sporodex ® L), (2.19) *Pythium oligandrum DV74* (products known as Polyversum), (2.20) *Trichoderma asperellum*, in particular strain ICC 012 (products known as Bioten ®), (2.21) *Trichoderma harzianum*, in particular *T. harzianum T39* (products known as Trichodex ®), and (2.22) *Beauveria brongniartii.*

In one embodiment, from the given fungi and yeasts (2-1) to (2-22), the fungi and yeasts given under the numbers (2.10), (2.11), and (2.15) are to be used or employed in the present invention, in one embodiment in combination with compound (I), optionally in the presence of an inoculant.

It is preferred to use or employ in the present invention the compound of formula (I) in combination with (2.9) *Lecanicillium lecanii*, optionally in the presence of an inoculant.

It is preferred to use or employ in the present invention the compound of formula (I) in combination with (2.9a) *Lecanicillium lecanii* strain KV01, optionally in the presence of an inoculant.

It is preferred to use or employ in the present invention the compound of formula (I) in combination with (2.10) *Metarhizium anisopliae*, in particular strain F 52, optionally in the presence of an inoculant.

It is preferred to use or employ in the present invention the compound of formula (I) in combination with (2.11) *Metschnikovia fructicola*, in particular strain NRRL Y-30752, optionally in the presence of an inoculant.

It is preferred to use or employ in the present invention the compound of formula (I) in combination with (2.15) *Paecilomyces lilacinus*, in particular spores of *P. lilacinus* strain 251, optionally in the presence of an inoculant.

It is preferred to use or employ in the present invention the compound of formula (I) in combination with (2.14) *Nomuraea rileyi*, optionally in the presence of an inoculant.

According to the invention biological control agents that are summarized under the term "protozoas" are:

(3.1) Nosema locustae, and (3.2) Vairimorpha.

It is preferred to use or employ in the present invention the compound of formula (I) in combination with (3.1) Nosema locustae, optionally in the presence of an inoculant.

It is preferred to use or employ in the present invention the compound of formula (I) in combination with (3.2) Vairimorpha, optionally in the presence of an inoculant.

According to the invention biological control agents that are summarized under the term "viruses" are:

(4.1) Gypsy moth (Lymantria dispar) nuclear polyhedrosis virus (NPV), (4.2) Tussock moth (Lymantriidae) NPV, (4.3) Heliothis NPV, (4.4) Pine sawfly (Neodiprion) NPV, and (4.5) Codling moth (Cydia pomonella) granulosis virus (GV).

It is preferred to use or employ in the present invention the compound of formula (I) in combination with (4.1) Gypsy moth nuclear polyhedrosis virus (NPV), optionally in the presence of an inoculant.

It is preferred to use or employ in the present invention the compound of formula (I) in combination with (4.2) Tussock moth NPV, optionally in the presence of an inoculant.

It is preferred to use or employ in the present invention the compound of formula (I) in combination with (4.3) Heliothis NPV, optionally in the presence of an inoculant.

It is preferred to use or employ in the present invention the compound of formula (I) in combination with (4.4) Pine sawfly NPV, optionally in the presence of an inoculant.

It is preferred to use or employ in the present invention the compound of formula (I) in combination with (4.5) Codling moth granulosis virus (GV), optionally in the presence of an inoculant.

According to the invention biological control agents that are summarized under the term "entomopathogenic nematode" are:

(5.1) Steinernema scapterisci, (5.2) Steinernema feltiae, (5.3) Steinernema carpocapsae, (5.4) Heterorhabditis heliothidis, and (5.5) Xenorhabdus luminescence.

It is preferred to use or employ in the present invention the compound of formula (I) in combination with (5.1) Steinernema scapterisci, optionally in the presence of an inoculant.

It is preferred to use or employ in the present invention the compound of formula (I) in combination with (5.2) Steinernema feltiae, optionally in the presence of an inoculant.

It is preferred to use or employ in the present invention the compound of formula (I) in combination with (5.3) Steinernema carpocapsae, optionally in the presence of an inoculant.

It is preferred to use or employ in the present invention the compound of formula (I) in combination with (5.4) Heterorhabditis heliothidis, optionally in the presence of an inoculant.

It is preferred to use or employ in the present invention the compound of formula (I) in combination with (5.5) Xenorhabdus luminescence, optionally in the presence of an inoculant.

Examples for inoculants which may be used or employed according to the invention are bacteria of the genus Rhizobium leguminosarum, Rhizobium tropici, Rhizobium loti, Rhizobium trifolii, Rhizobium meliloti, Rhizobium fredii, Azorhizobium caulinodans, Pseudomonas, Azospirillum, Azotobacter, Streptomyces, Burkholdia, Agrobacterium, Endo-, Ecto-, Vesicular-Arbuscular (VA) Mycorhizza. It is preferred to use soil-inoculants.

The amount of the biological control agent selected from bacteria, in particular spore-forming bacteria, fungi or yeasts, protozoas, viruses, and entomopathogenic which is used or employed in combination with a compound of formula (I), preferably with a compound (I), optionally in the presence of an inoculant, depends on the final formulation as well as size or type of the plant, plant parts, seeds, harvested fruits and vegetables to be treated. Usually, the biological control agent to be employed or used according to the invention is present in about 2 % to about 80 % (w/w), preferably in about 5 % to about 75 % (w/w), more preferably about 10 % to about 70 % (w/w) of its solo-formulation or combined-formulation with the compound of formula (I), and optionally the inoculant.

If bacteria, fungi or yeasts are selected as biological control agent, in particular those who are named as being preferred, namely (2.10), (2.11), and (2.15), it is preferred that they are present in a solo-formulation or the combined-formulation in a concentration in excess of $10^5$ - $10^{12}$cfu/g (colony forming units per gram), preferably in excess of $10^6$ - 10"cfu/g, more preferably $10^7$ - $10^{10}$cfu cfu/g and most preferably about $10^9$ cfu/g.

Also the amount of compound of formula (I) which is used or employed in combination with the biological control agent selected from bacteria, in particular spore-forming bacteria, fungi or yeasts, protozoas, viruses, and entomopathogenic nematodes, optionally in the presence of an inoculant, depends on the final formulation as well as size or type of the plant, plant parts, seeds, harvested fruit or vegetable to be treated. Usually, the compound of formula (I) to be employed or used according to the invention is present in about 0.1 % to about 80 % (w/w), preferably 1 % to about 60 % (w/w), more preferably about 10 % to about 50 % (w/w) of its solo-formulation or combined-formulation with the biological control agent selected from bacteria, in particular spore-forming bacteria, fungi or yeasts, protozoas, viruses, and entomopathogenic nematodes, and optionally the inoculant.

It is preferred to employ or use the compound of formula (I) and the biological control agent selected from bacteria, in particular spore-forming bacteria, fungi or yeasts, protozoas, viruses, and entomopathogenic nematodes, and if present also the inoculant in an synergistic weight ratio. The skilled person is able to find out the synergistic weight ratios for the present invention by routine methods. The skilled person understands that these ratios refer to the ratio within a combined-formulation as well as to the calculative ratio of compound of formula (I) and the biological control agent described herein when both components are applied as mono-formulations to a plant to be treated. The skilled person can calculate this ratio by simple mathematics since the volume and the amount of compound of formula (I) and the biological control agent, respectively, in a mono-formulation is known to the skilled person. In one embodiment, the said ratio refer to the ratio of the both components after both components, i.e. compound of formula (I) and the biological control agent, respectively, were applied to a plant to be treated independently whether the components were applied to a plant to be treated in form of solo-applications or in form of a combined-formulation.

In particular, the synergistic weight ratio of the compound of formula (I) to the bacteria, in particular spore forming bacteria, as biological control agent lies in the range of 100 : 1 and 1 : 1000 (wt/wt), preferably in the range of 50 : 1 and 1 : 500 (wt/wt). It has to be noted that before mentioned ratios ranges are based on the assumption that the spore preparation of the bacterium contains around $10^{11}$ spores per gram. If spore preparations vary in density, the ratios have to be adapted accordingly to match the above listed ratio ranges. A ratio of 1:100 means 100 weight parts of the spore preparations of the spore forming bacteria to 1 weight part of the compound of formula (I).

In particular, the synergistic weight ratio of the compound of formula (I) to the fungi or yeasts lies in the range of 100 : 1 to 1 : 20.000, preferably in the range of 50:1 to 1:10.000.

In one embodiment of the present invention, a biological control agent is a fungus and the concentration of the fungus after dispersal is at least 50 g/ha, such as 50 - 7500 g/ha, 50 - 2500 g/ha, 50 - 1500 g/ha; at least 250 g/ha (hectare), at least 500 g/ha or at least 800 g/ha.

In one embodiment of the present invention, a biological control agent is a fungus, such as *Paecilomyces lilacinus*, e.g., strain 251, and the concentration of the fungus after dispersal is at least 50 g/ha; at least 100 g/ha; at least 1000 g/ha; at least 2500 g/ha, such as 2500 - 7500 g/ha, 2500 - 6000 g/ha; or at least 4000 g/ha, such as 4000 - 6000 g/ha.

In one embodiment of the present invention, a biological control agent is a fungus, such as *Metarhizium anisopliae*, e.g., strain F52 and the concentration of the fungus after dispersal is at least 50 g/ha, such as 50 - 7500 g/ha, 50 - 2500 g/ha, 50 - 250 g/ha; or at least 100 g/ha, such as 100 g/ha - 1000 g/ha or 100 - 250 g/ha.

In one embodiment of the present invention, a biological control agent is yeast, such as *Metschnikowia fructicola*, and the concentration of the yeast after dispersal is at least 50 g/ha, such as 50 - 5000 g/ha, 50 - 2000 g/ha; at least 1000 g/ha; at least 1500 g/ha, such as 500 - 5000 g/ha, 500 - 2500 g/ha, 500 - 2000 g/ha.

In one embodiment of the present invention, a biological control agent is a bacterium and the concentration of the bacteria after dispersal is at least 50 g/ha, at least 100 g/ha or at least 150 g/ha.

In one embodiment of the present invention, a biological control agent is a bacterium, such as *B. thuringiensis* and the concentration of the bacteria after dispersal is at least 50 g/ha (hectare), such as 50 - 7500 g/ha, 50 - 2500 g/ha, 50 - 1500 g/ha; at least 250 g/ha; at least 100 g/ha, such as 100 - 5000 g/ha, 100 - 2500 g/ha, 100 - 1500 g/ha or 100 - 250 g/ha; or at least 800 g/ha, such as 800 - 5000 g/ha or 800 - 2500 g/ha.

In another embodiment of the present invention, a biological control agent is a bacterium, such as *B. subtilis*, e.g., strain GB 03, and the concentration of the bacteria after dispersal is at least 50 g/ha such as 50 - 5000 g/ha, 50 - 2500 g/ha, 50 - 200 g/ha; at least 100 g/ha, at least 500 g/ha, at least 800 g/ha, such as 800 - 5000 g/ha or 800 - 2500 g/ha.

In another embodiment of the present invention, a biological control agent is a bacterium, such as *B. firmus*, e.g., strain I-1582, and the concentration of the bacteria after dispersal is at least 50 g/ha such as 50 - 5000 g/ha, 50 - 2500 g/ha, 50 - 200 g/ha; at least 100 g/ha, at least 500 g/ha, at least 800 g/ha, such as 800 - 5000 g/ha or 800 - 2500 g/ha.

In another embodiment of the present invention, a biological control agent is a bacterium, such as *B. amyloliquefaciens* and the concentration of the bacteria after dispersal is at least 500 g/ha, such as 500 - 5000 g/ha, 500 - 2500 g/ha.

In one embodiment of the present invention, a biological control agent is a virus and the concentration of the virus after dispersal is at least 50 g/ha such as 50 - 7500 g/ha, 50 - 2500 g/ha, 50 - 1500 g/ha; at least 100 g/ha or at least 150 g/ha.

In one embodiment of the present invention, a biological control agent is a virus, such as Codling moth (Cydia pomonella) granulosis virus and the concentration of the virus after dispersal is at least 50 g/ha (hectare) such as 50 - 5000 g/ha, 50 - 2500 g/ha, 50 - 1500 g/ha or 50 - 250 g/ha; or at least 100 g/ha, such as 100 - 1000 g/ha, 100 - 500 g/ha or 100 - 250 g/ha.

In one embodiment of the present invention, a biological control agent is a nematode and the concentration of the nematodes is at least $10^6$ nematodes/ha, e.g., larval stage nematodes/ha, such as $10^6$ - $10^{15}$ nematodes/ha, e.g., larval stage nematodes/ha, $10^6$- $10^{12}$ nematodes/ha, e.g., larval stage nematodes/ha, at least $10^8$ nematodes/ha, e.g., larval stage nematodes/ha such as $10^8$ - $10^{15}$ nematodes/ha, e.g., larval stage nematodes/ha, $10^8$ - $10^{12}$ nematodes/ha, e.g., larval stage nematodes/ha; or at least $10^9$ nematodes/ha, e.g., larval stage nematodes/ha, such as $10^9$ - $10^{15}$ nematodes/ha, e.g., larval stage nematodes/ha or $10^9$ - $10^{12}$ nematodes/ha, e.g., larval stage nematodes/ha.

In one embodiment of the present invention, the ratios between a compound of formula (I) and bacteria (such as *Bacillus amyloliquefaciens, Bacillus subtilis, Bacillus firmus, Bacillus thuringiensis subsp. aizawai, Bacillus thuringiensis subsp. israeliensis, Bacillus thuringiensis subsp. kurstaki, Bacillus thuringiensis subsp. tenebrionis, Bacillus pumilus, Bacillus cereus*) in a combined-formulation or on or in a plant to be treated or its surrounding, habitat or storage space is between 100:1 to 1:1000, between 50:1 to 1:500 or even 5:1 to 1:100.

In one embodiment of the present invention, the ratios between a compound of formula (I) and fungi (such as Metarhizium anisopliae, Paecilomyces lilacinus, Beauveria bassiana, Nomuraea rileyi) in a combined-formulation or on or in a plant to be treated or its surrounding, habitat or storage space is between 100:1 to 1:2000, between 50:1 to 1: 1000 or even 25:1 to 1:200.

In one embodiment of the present invention, the ratios between compound of formula (I) and yeast (such as Metschnikowia fructicola) and in a combined-formulation or on or in a plant to be treated or its surrounding, habitat or storage space is between 100:1 to 1:2000, between 50:1 to 1:1000 or even 25:1 to 1:200.

In one embodiment of the present invention, the ratios between nematodes (such as Steinernema feltiae and Steinernema carpocapsae) and compound of formula (I) in a solo- or combined-formulation or on or in a plant to be treated or its surrounding, habitat or storage space is between 125:1 to 1:125, between 100:1 to 1:25 or even 50:1 to 1:5.

The good insecticidal and acaricidal action of the inventive combinations is evident from the examples which follow. While the individual active ingredients have weaknesses in their action, the combinations exhibit an action which exceeds a simple sum of actions.

A synergistic effect in insecticides and acaricides is present whenever the action of the active ingredient combinations is greater than the sum of the actions of the active ingredients applied individually.

**Formula for the efficacy of the combination of two compounds**

The expected efficacy of a given combination of two compounds is calculated as follows (see Colby, S.R., "Calculating Synergistic and antagonistic Responses of Herbicide Combinations", Weeds 15, pp. 20-22, 1967):

if

X is the efficacy expressed in % mortality of the untreated control for test compound A at a concentration of m ppm or m g/ha,

Y is the efficacy expressed in % mortality of the untreated control for test compound B at a concentration of n ppm or n g/ha,

E is the efficacy expressed in % mortality of the untreated control using the mixture of A and B at m and n ppm or m and n g/ha,

$$E = X + Y - \frac{X \cdot Y}{100}$$

then is
If the observed insecticidal efficacy of the combination is higher than the one calculated as "E", then the combination of the two compounds is more than additive, i.e., there is a synergistic effect.

**<u>Examples</u>**

**Example 1:**

**Myzus persicae - test**

| | | |
|---|---|---|
| Solvent: | 78.0 | parts by weight acetone |
| | 1.5 | parts by weight dimethylformamide |
| Emulsifier: | 0.5 | parts by weight alkylarylpolyglycolether |

To produce a suitable preparation of active compound, 1 part by weight of active compound is mixed with the stated amount of solvent and emulsifier, and the concentrate is diluted with emulsifier- containing water to the desired concentration. To produce a suitable preparation of a biological suspension the cells or spores are diluted with emulsifier-containing water to the desired concentration.

Chinese cabbage (*Brassica pekinensis*) leaf- discs infected with all instars of the green peach aphid (*Myzus persicae*), are sprayed with a preparation of the active ingredient at the desired concentration. After the specified period of time mortality in % is determined. 100 % means that all aphids have been killed; 0 % means that none of the aphids have been killed.

The following combinations of compound (I) and one further active ingredient or biological control agent showed a synergistic effect according to the invention:

**<u>Table 1: Myzus persicae - Test</u>**

| Active ingredient/ biological control agent | Concentration g ai/ha | Mortality in % after $1^d$ |
|---|---|---|
| Compound (I) | 100<br>20<br>4 | 0<br>0<br>0 |
| Acrinathrin | 0,8 | 80 |

(continued)

| | | | |
|---|---|---|---|
| Compound (I) + Acrinathrin | 4 + 0,8 | obs.* 100 | cal.** 80 |
| Imidacloprid | 0,8 | 0 | |
| Compound (I) + Imidacloprid | 4 + 0,8 | obs.* 70 | cal.** 0 |
| Clothianidin | 20 | 0 | |
| Compound (I) + Clothianidin | 100 + 20 | obs.* 90 | cal.** 0 |
| Dinotefuran | 20 | 0 | |
| Compound (I) + Dinotefuran | 20 + 20 | obs.* 70 | cal.** 0 |
| Chlorpyrifos | 4 | 70 | |
| Compound (I) + Chlorpyrifos | 4 + 4 | obs.* 100 | cal.** 70 |
| Sulfoxaflor | 0,16 | 0 | |
| Compound (I) + Sulfoxaflor | 4+0,16 | obs.* 80 | cal.** 0 |
| Flupyradifurone | 20 | 70 | |
| Compound (I) + Flupyradifurone | 100 + 20 | obs.* 90 | cal.** 70 |

| Active ingredient/ biological control agent | Concentration g ai/ha | Mortality in % after 6d | |
|---|---|---|---|
| Compound (I) | 100<br>20<br>4 | 0<br>0<br>0 | |
| Azadirachtin | 100 | 0 | |
| Compound (I) + Azadirachtin | 100 + 100 | obs.* 70 | cal.** 0 |
| Bacillus subtilis strain GB 03 | 2000 | 0 | |
| Compound (I) + Bacillus subtilis | 100 + 2000 | obs.* 70 | cal.** 0 |
| Cydia pomonella Granuloseviren (CpGV) | 1000 | 0 | |
| Compound (I) + CpGV | 100 + 1000 | obs.* 100 | cal.** 0 |
| Chloranthraniliprole | 4 | 80 | |
| Compound (I) + Chloranthraniliprole | 100 + 4 | obs.* 100 | cal.** 80 |

(continued)

| | | | |
|---|---|---|---|
| Compound (I) + Chloranthraniliprole<br>Milbemectin | <br>4 | obs.*<br>70 | cal.** |
| Compound (I) + Milbemectin | <br>20 + 4 | obs.*<br>90 | cal.**<br>70 |
| Pymetrozine | 4 | 0 | |
| Compound (I) + Pymetrozine | <br>4 + 4 | obs.*<br>100 | cal.**<br>0 |
| Lambda-Cyhalothrin | 0,16 | 0 | |
| Compound (I) + Lambda-Cyhalothrin | <br>4 + 0,16 | obs.*<br>100 | cal.**<br>0 |
| Dimethoate | 20 | 0 | |
| Compound (I) + Dimethoate | <br>20 + 20 | obs.*<br>80 | cal.**<br>0 |

**Example 2:**

**Phaedon cochleariae larvae - spray application**

| | | |
|---|---|---|
| Solvent: | 78.0 | parts by weight of acetone |
| | 1.5 | parts by weight of dimethylformamide |
| Emulsifier: | 0.5 | parts by weight of alkylaryl polyglycolether |

To produce a suitable preparation of active compound, 1 part by weight of active compound is mixed with the stated amount of solvent and emulsifier, and the concentrate is diluted with emulsifier- containing water to the desired concentration. To produce a suitable preparation of a biological suspension the cells, viruses or spores are diluted with emulsifier- containing water to the desired concentration.

Chinese cabbage (*Brassica pekinensis*) leaf- discs are sprayed with a preparation of the active ingredient of the desired concentration. Once dry, the leaf discs are infested with mustard beetle larvae (*Phaedon cochleariae*).

After the specified period of time, mortality in % is determined. 100 % means that all the beetle larvae have been killed; 0 % means that none of the beetle larvae have been killed. The mortality values thus determined are recalculated using the Colby-formula.

The following combinations of compound (I) and one further active ingredient or biological control agent showed a synergistic effect according to the invention:

**Table 2: Phaedon cochleariae larvae - Test**

| Active ingredient/ biological control agent | Concentration g ai/ha | Mortality in % after 2[d] |
|---|---|---|
| Compound (I) | 100<br>20<br>4<br>0,8 | 0<br>0<br>0<br>0 |
| 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide/ 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide | 0.8 | 50 |

(continued)

| | | |
|---|---|---|
| Compound (I) + 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide/ 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide | 20 + 0.8 | obs.* 100 cal.** 50 |
| Flupyradifurone | 500 | 50 |
| Compound (I) + Flupyradifurone | 100 + 500 | obs.* 100 cal.** 50 |
| Fipronil | 0,16 | 0 |
| Compound (I) + Fipronil | 0,8 + 0,16 | obs.* 100 cal.** 0 |
| Lambda-Cyhalothrin | 0,8 | 67 |
| Compound (I) + Lambda-Cyhalothrin | 20 + 0,8 | obs.* 100 cal.** 67 |
| Emamectin-benzoate | 0,8 | 67 |
| Compound (I) + Emamectin-benzoate | 100 + 0,8 | obs.* 100 cal.** 67 |
| Lepimectin | 4 | 50 |
| Compound (I) + Lepimectin | 4 + 4 | obs.* 83 cal.** 50 |
| Thiamethoxam | 20 | 67 |
| Compound (I) + Thiamethoxam | 100 + 20 | obs.* 83 cal.** 67 |
| Compound (I) | 100<br>20<br>4 | 0<br>0<br>0 |
| Chloranthraniliprole | 0,8 | 33 |
| Compound (I) + Chloranthraniliprole | 20 + 0,8 | obs.* 83 cal.** 33 |
| Sulfoxaflor | 4 | 0 |
| Compound (I) + Sulfoxaflor | 100 + 4 | obs.* 33 cal.** 0 |
| Alpha-Cypermethrin | 4 | 0 |
| Compound (I) + Alpha-Cypermethrin | 100 + 4 | obs.* 67 cal.** 0 |
| Bifenthrin | 0,8 | 50 |
| Compound (I) + Bifenthrin | 20 + 0,8 | obs.* 83 cal.** 50 |
| Imidacloprid | 20 | 0 |
| Compound (I) + Imidacloprid | 100 + 20 | obs.* 50 cal.** 0 |
| Thiacloprid | 20 | 33 |

| | | | |
|---|---|---|---|
| Compound (I) + Thiacloprid | 100 + 20 | obs.* 83 | cal.** 33 |
| Clothianidin | 20 | 83 | |
| Compound (I) + Clothianidin | 100 + 20 | obs.* 100 | cal.** 83 |
| Acetamiprid | 20 | 33 | |
| Compound (I) + Acetamiprid | 100 + 20 | obs.* 83 | cal.** 33 |
| Dinotefuran | 20 | 0 | |
| Compound (I) + Dinotefuran | 20 + 20 | obs.* 33 | cal.** 0 |
| Nitenpyram | 20 | 0 | |
| Compound (I) + Nitenpyram | 100 + 20 | obs.* 50 | cal.** 0 |
| Tefluthrin | 20 | 50 | |
| Compound (I) + Tefluthrin | 100 + 20 | obs.* 83 | cal.** 50 |
| Flufenoxuron | 20 | 0 | |
| Compound (I) + Flufenoxuron | 100 + 20 | obs.* 50 | cal.** 0 |
| Triflumuron | 20 | 0 | |
| Compound (I) + Triflumuron | 100 + 20 | obs.* 67 | cal.** 0 |
| Beta-Cyfluthrin | 0,8 | 50 | |
| Compound (I) + Beta-Cyfluthrin | 20 + 0,8 | obs.* 100 | cal.** 50 |
| Dimethoate | 100 | 0 | |
| Compound (I) + Dimethoate | 100 + 100 | obs.* 50 | cal.** 0 |
| Thiodicarb | 100 | 0 | |
| Compound (I) + Thiodicarb | 100 + 100 | obs.* 33 | cal.** 0 |
| * obs. = observed insecticidal efficacy, ** cal. = efficacy calculated with Colby-formula | | | |

**Example 3:**

**Spodoptera frugiperda - spray application**

| | | |
|---|---|---|
| Solvent: | 78.0 | parts by weight of acetone |
| | 1.5 | parts by weight of dimethylformamide |
| Emulsifier: | 0.5 | parts by weight of alkylaryl polyglycolether |

To produce a suitable preparation of active compound, 1 part by weight of active compound is mixed with the stated amount of solvent and emulsifier, and the concentrate is diluted with emulsifier- containing water to the desired

concentration. To produce a suitable preparation of a biological suspension the cells, viruses or spores are diluted with emulsifier- containing water to the desired concentration.

Cabbage (*Brassica oleracea*) leaf- discs are sprayed with a preparation of the active ingredient at the desired concentration. Once dry, the leaf discs are infested with larvae of the fall army worm (*Spodoptera frugiperda*).

After the specified period of time, mortality in % is determined. 100 % means that all the caterpillars have been killed; 0 % means that none of the caterpillars have been killed. The mortality values thus determined are recalculated using the Colby-formula.

The following combinations of compound (I) and one further active ingredient or biological control agent showed a synergistic effect according to the invention:

**Table 3: Spodoptera frugiperda - Test**

| Active ingredient/ biological control agent | Concentration g ai/ha | Mortality in % after 2d |
|---|---|---|
| Compound (I) | 100<br>20<br>4 | 0<br>0<br>0 |
| 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide/ 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide | 0.16 | 67 |
| Compound (I) + 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide/ 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide | 4 + 0.16 | obs.* cal.**<br>100 67 |
| Gamma-Cyhalothrin | 0.16 | 0 |
| Compound (I) + Gamma-Cyhalothrin | 4 + 0.16 | obs.* cal.**<br>50 0 |
| Chlorpyrifos | 100 | 50 |
| Compound (I) + Chlorpyrifos | 20 + 20 | obs.* cal.**<br>67 50 |
| Triflumuron | 20 | 0 |
| Compound (I) + Triflumuron | 100 + 20 | obs.* cal.**<br>67 0 |
| Diflubenzuron | 100 | 67 |
| Compound (I) + Diflubenzuron | 100 + 100 | obs.* cal.**<br>100 67 |
| Compound (I) | 100<br>20<br>4<br>0,8 | 0<br>0<br>0<br>0 |

(continued)

| | | | |
|---|---|---|---|
| Compound (I) + Diflubenzuron | | obs.* | cal.** |
| Bifenthrin | 0.16 | 0 | |
| Compound (I) + Bifenthrin | 4 + 0.16 | obs.* 33 | cal.** 0 |
| Thiacloprid | 20 | 0 | |
| Compound (I) + Thiacloprid | 100 + 20 | obs.* 33 | cal.** 0 |
| Lambda-Cyhalothrin | 0,16 | 33 | |
| Compound (I) + Lambda-Cyhalothrin | 4+0,16 | obs.* 50 | cal.** 33 |
| Milbemectin | 0,8 | 0 | |
| Compound (I) + Milbemectin | 4+0,8 | obs.* 33 | cal.** 0 |
| Cypermethrin | 0,8 | 67 | |
| Compound (I) + Cypermethrin | 4+0,8 | obs.* 83 | cal.** 67 |
| Deltamethrin | 0,032 | 0 | |
| Compound (I) + Deltamethrin | 0,8 + 0,032 | obs.* 67 | cal.** 0 |
| Beta-Cyfluthrin | 0,8 | 83 | |
| Compound (I) + Beta-Cyfluthrin | 20 + 0,8 | obs.* 100 | cal.** 83 |
| Indoxacarb | 0,8 | 50 | |
| Compound (I) + Indoxacarb | 4+0,8 | obs.* 100 | cal.** 50 |
| * obs. = observed insecticidal efficacy, ** cal. = efficacy calculated with Colby-formula | | | |

**Example 4:**

**Tetranychus urticae - test (OP - resistant)**

| | | |
|---|---|---|
| Solvent: | 78.0 | parts by weight acetone |
| | 1.5 | parts by weight dimethylformamide |
| Emulsifier: | 0.5 | parts by weight alkylarylpolyglycolether |

To produce a suitable preparation of active compound, 1 part by weight of active compound is mixed with the stated amount of solvent and emulsifier, and the concentrate is diluted with emulsifier- containing water to the desired concentration. To produce a suitable preparation of a biological suspension the cells or spores are diluted with emulsifier-containing water to the desired concentration. Leaf discs of French beans (*Phaseolus vulgaris*) infected with all instars of the Two-spotted spider mite (*Tetranychus urticae*), are sprayed with a preparation of the active ingredient at the desired concentration.

After the specified period of time mortality in % is determined. 100 % means that all spider mites have been killed; 0 % means that none of the spider mites have been killed.

The following combinations of compound (I) and one further active ingredient or biological control agent showed

a synergistic effect according to the invention:

**Table 4: Tetranychus urticae - Test**

| Active ingredient/ biological control agent | Concentration g ai/ha | Mortality in % after 2d | |
|---|---|---|---|
| Compound (I) | 20<br>4 | 80<br>30 | |
| Azadirachtin | 100 | 0 | |
| Compound (I) + Azadirachtin | 20 + 100 | obs.*<br>100 | cal.**<br>80 |
| Fluensulfone | 2000 | 0 | |
| Compound (I) + Fluensulfone | 4 + 2000 | obs.*<br>70 | cal.**<br>30 |
| Harpin - protein | 1.5 | 0 | |
| Compound (I) + Harpin - protein | 4 + 1.5 | obs.*<br>70 | cal.**<br>30 |
| Metschnikowia fructicola | 500 | 0 | |
| Compound (I) + Metschnikowia fructicola | 4 + 500 | obs.*<br>70 | cal.**<br>30 |
| Paecilomyces lilacinus strain 251 | 4000 | 0 | |
| Compound (I) + Paecilomyces lilacinus | 4 + 4000 | obs.*<br>70 | cal.**<br>30 |
| Pyrethrum | 500 | 70 | |
| Compound (I) + Pyrethrum | 4 + 500 | obs.*<br>90 | cal.**<br>79 |
| Buprofezin | 500 | 0 | |
| Compound (I) + Buprofezin | 4 + 500 | obs.*<br>80 | cal.**<br>30 |
| Alpha-Cypermethrin | 0,16 | 0 | |
| Compound (I) + Alpha-Cypermethrin | 4 + 0,16 | obs.*<br>70 | cal.**<br>30 |
| Imidacloprid | 0,8 | 0 | |
| Compound (I) + Imidacloprid | 4 + 0,8 | obs.*<br>90 | cal.**<br>30 |
| Nitenpyram | 0,8 | 0 | |

(continued)

| | | | |
|---|---|---|---|
| Compound (I) + Nitenpyram | 4 + 0,8 | obs.* 100 | cal.** 30 |
| Pyrifluquinazone | 0,8 | 0 | |
| Compound (I) + Pyrifluquinazone | 4 + 0,8 | obs.* 80 | cal.** 30 |
| Flupyradifurone | 0,8 | 0 | |
| Compound (I) + Flupyradifurone | 4 + 0,8 | obs.* 70 | cal.** 30 |
| Sulfoxaflor | 0,16 | 0 | |
| Compound (I) + Sulfoxaflor | 4 + 0,16 | obs.* 80 | cal.** 30 |
| Spinetoram | 0,8 | 0 | |
| Compound (I) + Spinetoram | 4+0,8 | obs.* 70 | cal.** 30 |
| Spinosad | 0,8 | 0 | |
| Compound (I) + Spinosad | 4+0,8 | obs.* 80 | cal.** 30 |
| Tefluthrin | 0,8 | 0 | |
| Compound (I) + Tefluthrin | 4+0,8 | obs.* 70 | cal.** 30 |
| Fipronil | 0,8 | 0 | |
| Compound (I) + Fipronil | 4+0,8 | obs.* 70 | cal.** 30 |
| Chlorpyrifos | 4 | 0 | |
| Compound (I) + Chlorpyrifos | 4+4 | obs.* 70 | cal.** 30 |
| Thiodicarb | 4 | 0 | |
| Compound (I) + Thiodicarb | 4+4 | obs.* 70 | cal.** 30 |
| Diflubenzuron | 4 | 0 | |
| Compound (I) + Diflubenzuron | 4+4 | obs.* 70 | cal.** 30 |

(continued)

| | | | |
|---|---|---|---|
| Compound (I) + Diflubenzuron | | obs.* | cal.** |
| Flufenoxuron | 0,8 | 0 | |
| Compound (I) + Flufenoxuron | 4+0,8 | obs.* 70 | cal.** 30 |
| Chlorfenapyr | 0,8 | 0 | |
| Compound (I) + Chlorfenapyr | 4+0,8 | obs.* 70 | cal.** 0 |
| Tebufenpyrad | 4 | 0 | |
| Compound (I) + Tebufenpyrad | 4+4 | obs.* 80 | cal.** 30 |
| Abamectin | 0,032 | 0 | |
| Compound (I) + Abamectin | 4 + 0,032 | obs.* 70 | cal.** 30 |
| Compound (I) | 4 | 30 | |
| Bacillus firmus I-1582 | 250 | 0 | |
| Compound (I) + Bacillus firmus | 4 + 250 | obs.* 70 | cal.** 30 |
| Thymol | 500 | 0 | |
| Compound (I) + Thymol | 4 + 500 | obs.* 100 | cal.** 30 |
| Bacillus subtilis strain GB 03 | 2000 | 0 | |
| Compound (I) + Bacillus subtilis | 4 + 2000 | obs.* 80 | cal.** 30 |
| Metarhizium anisopliae strain F 52 | 100 | 0 | |
| Compound (I) + Metarhizium anisopliae | 4 + 100 | obs.* 90 | cal.** 30 |
| Cydia pomonella Granuloseviren (CpGV) | 1000 | 0 | |
| (I) + CpGV | 4 + 1000 | obs.* 70 | cal.** 30 |
| * obs. = observed insecticidal efficacy, ** cal. = efficacy calculated with Colby-formula | | | |

**Example 5:**

**Tetranychus urticae- test; OP-resistant; (TETRUR)**

| | |
|---|---|
| Solvent: | 7 parts by weight of dimethylformamide |
| Emulsifier: | 2 parts by weight of alkylaryl polyglycolether |

To produce a suitable preparation of active compound, 1 part by weight of active compound is mixed with the stated amount of solvent and emulsifier, and the concentrate is diluted with emulsifier-containing water to the desired concentration. Ammonium salt and/or penetration enhancer in a dosage of 1000ppm are added to the desired concentration if necessary. To produce a suitable preparation of a biological suspension the cells or spores are diluted with emulsifier- containing water to the desired concentration.

Bean plants (*Phaseolus vulgaris*) which are heavily infested with all stages of the two-spotted spider mite (*Tetranychus urticae*) are treated by being sprayed with the preparation of the active compound of the desired concentration.

After the specified period of time, mortality in % is determined. 100 % means that all the spider mites have been killed; 0 % means that none of the spider mites have been killed.

The following combinations of compound (I) and one further active ingredient or biological control agent showed a synergistic effect according to the invention:

**Table 5: Tetranychus urticae - Test**

| Active ingredient/ biological control agent | Concentration ppm | Mortality in % after 5[d] | |
|---|---|---|---|
| Compound (I) | 0.8 | 40 | |
| Bacillus thuringiensis spp aizawai | 1000 | 15 | |
| **Compound (I) + Bacillus thuringiensis** | **0.8 + 1000** | **obs.*** **80** | **cal.**** **49** |
| Bacillus amyloliquefaciens FZB42 | 2000 | 0 | |
| **Compound (I) + Bacillus amyloliquefaciens** | **0.8 + 2000** | **obs.*** **60** | **cal.**** **40** |

**Claims**

**1.** Active ingredient combinations comprising a compound of the formula (I)

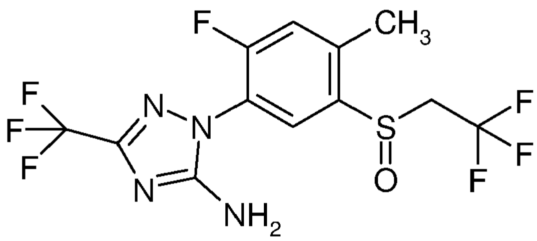

(I),

and one or more further insecticides and / or acaricides and / or biological control agents from the group (II), selected from

(1) Acetylcholinesterase (AChE) inhibitors, for example
carbamates, e.g. Alanycarb (II-1-1), Aldicarb (II-1-2), Bendiocarb (II-1-3), Benfuracarb (II-1-4), Butoxycarboxim (II-1-5), Carbaryl (II-1-6), Carbofuran (II-1-7), Carbosulfan (II-1-8), Ethiofencarb (II-1-9), Fenobucarb (II-1-10), Furathiocarb (II-1-11), Isoprocarb (II-1-12), Methomyl (II-1-13), Metolcarb (II-1-14), Oxamyl (II-1-15), Pirimicarb (II-1-16), Propoxur (II-1-17), Thiodicarb (II-1-18), and XMC (II-1-19); or
organophosphates, e.g. Acephate (II-1-20), Azinphos-ethyl (II-1-21), Azinphos-methyl (II-1-22), Chlorethoxyfos (II-1-23), Chlorfenvinphos (II-1-24), Chlorpyrifos (II-1-25), Chlorpyrifos-methyl (II-1-26), Cyanophos (II-1-27), Diazinon (II-1-28), Dichlorvos/DDVP (II-1-29), Dimethoate (II-1-30), Dimethylvinphos (II-1-31), Disulfoton (II-1-32), EPN (II-1-46), Ethion (II-1-33), Ethoprophos (II-1-34), Fenamiphos (II-1-35), Fenitrothion (II-1-36), Fenthion (II-1-37), Fosthiazate (II-1-38), Isofenphos (II-1-39), Isopropyl O-(methoxyaminothio-phosphoryl) salicylate (II-1-40), Isoxathion (II-1-41), Malathion (II-1-42), Methidathion (II-1-43), Monocrotophos (II-1-44), Naled (II-1-45), Oxydemeton-methyl (II-1-46), Phenthoate (II-1-47), Phosalone (II-1-48), Phosmet (II-1-49), Pirimiphos-methyl (II-1-50), Profenofos (II-1-51), Prothiofos (II-1-52), Pyraclofos (II-1-53), Pyridaphenthion (II-1-54), Quinalphos (II-1-55), Tetrachlorvinphos (II-1-56), Thiometon (II-1-57), Triclorfon (II-1-58), and Vamidothion (II-1-59);
(2) GABA-gated chloride channel antagonists, for example
cyclodiene organochlorines, e.g. Chlordane (II-2-1) and Endosulfan (II-2-2); or
phenylpyrazoles (fiproles), e.g. Fipronil (II-2-3) ;
(3) Sodium channel modulators / voltage-dependent sodium channel blockers, for example pyrethroids, e.g. Acrinathrin (II-3-1), Allethrin (II-3-2), d-cis-trans Allethrin (II-3-3), d-trans Allethrin (II-3-4), Bifenthrin (II-3-5),

Cycloprothrin (II-3-6), Cyfluthrin (II-3-7), beta-Cyfluthrin (II-3-8), Cyhalothrin (II-3-9), lambda-Cyhalothrin (II-3-10), gamma-Cyhalothrin (II-3-11), Cypermethrin (II-3-12), alpha-Cypermethrin (II-3-13), beta-Cypermethrin (II-3-14), theta-Cypermethrin (II-3-15), zeta-Cypermethrin (II-3-16), Deltamethrin (II-3-17), Etofenprox (II-3-18), Fenpropathrin (II-3-19), Fenvalerate (II-3-20), Flucythrinate (II-3-21), tau-Fluvalinate (II-3-22), Kadethrin (II-3-23), Permethrin (II-3-24), Phenothrin [(1R)-trans isomer) (II-3-25), Pyrethrine (pyrethrum) (II-3-26), Resmethrin (II-3-27), Silafluofen (II-3-28), Tefluthrin (II-3-29), Tetramethrin (II-3-30), Tetramethrin [(1R) isomers)] (II-3-31), and Tralomethrin (II-3-32), or
DDT (II-3-33); or Methoxychlor (II-3-34);
(4) Nicotinic acetylcholine receptor (nAChR) agonists, for example
neonicotinoids, e.g. Acetamiprid (II-4-1), Clothianidin (II-4-2), Dinotefuran (II-4-3), Imidacloprid (II-4-4), Nitenpyram (II-4-5), Thiacloprid (II-4-6), and Thiamethoxam (II-4-7); or
Nicotine (II-4-8);
(5) Nicotinic acetylcholine receptor (nAChR) allosteric activators, for example
spinosyns, e.g. Spinetoram (II-5-1) and Spinosad (II-5-2);
(6) Chloride channel activators, for example
avermectins/milbemycins, e.g. Abamectin (II-6-1), Emamectin benzoate (II-6-2), Lepimectin (II-6-3), and Milbemectin (II-6-4);
(7) Juvenile hormone mimics, for example
juvenile hormon analogues, e.g. and Methoprene (II-7-1); or
Fenoxycarb (II-7-2); or Pyriproxyfen (II-7-3);
(8) Miscellaneous non-specific (multi-site) inhibitors, for example
alkyl halides, e.g. Methyl bromide (II-8-1) and other alkyl halides; or
Chloropicrin (II-8-2); or Sulfuryl fluoride (II-8-3); or Borax (II-8-4); or Tartar emetic (II-8-4);
(9) Selective homopteran feeding blockers, e.g. Pymetrozine (II-9-1);
(10) Mite growth inhibitors, e.g. Clofentezine (II-10-1), Hexythiazox (II-10-2), and Diflovidazin (II-10-3); or
Etoxazole (II-10-4);
(11) Microbial disruptors of insect midgut membranes, e.g. Bacillus thuringiensis subspecies israelensis (II-11-1), Bacillus sphaericus (II-11-2), Bacillus thuringiensis subspecies aizawai (II-11-3), Bacillus thuringiensis subspecies kurstaki (II-11-4), Bacillus thuringiensis subspecies tenebrionis (II-11-5), and BT crop proteins: Cry1Ab, Cry1Ac, Cry1Fa, Cry2Ab, mCry3A, Cry3Ab, Cry3Bb, Cry34/35Ab1 (II-11-6);
(12) Inhibitors of mitochondrial ATP synthase, for example Diafenthiuron (II-12-1); or
organotin miticides, e.g. Azocyclotin (II-12-2), Cyhexatin (II-12-3), and Fenbutatin oxide (II-12-4); or
Propargite (II-12-5); or Tetradifon (II-12-6);
(13) Uncouplers of oxidative phoshorylation via disruption of the proton gradient, for example Chlorfenapyr (II-13-1), DNOC (II-13-2), and Sulfluramid (II-13-3);
(14) Nicotinic acetylcholine receptor (nAChR) channel blockers, for example Bensultap (II-14-1), Cartap hydrochloride (II-14-2), and Thiocyclam (II-14-3);
(15) Inhibitors of chitin biosynthesis, type 0, for example Chlorfluazuron (II-15-1), Diflubenzuron (II-15-2), Flucycloxuron (II-15-3), Flufenoxuron (II-15-4), Hexaflumuron (II-15-5), Lufenuron (II-15-6)" Teflubenzuron (II-15-7), and Triflumuron (II-15-8);
(16) Inhibitors of chitin biosynthesis, type 1, for example Buprofezin (II-16-1);
(17) Moulting disruptors, for example Cyromazine (II-17-1);
(18) Octopamine receptor agonists, for example Amitraz (II-18-1);
(19) Mitochondrial complex III electron transport inhibitors, for example Hydramethylnon (II-19-1); or Acequinocyl (II-19-2); or Fluacrypyrim (II-19-3);
(20) Mitochondrial complex I electron transport inhibitors, for example
METI acaricides, e.g. Fenpyroximate (II-20-1), Pyrimidifen (II-20-2), Pyridaben (II-20-3), Tebufenpyrad (II-20-4), and Tolfenpyrad (II-20-5); or
Rotenone (Derris) (II-20-6);
(21) Voltage-dependent sodium channel blockers, e.g. Indoxacarb (II-21-1);
(22) Inhibitors of acetyl CoA carboxylase, for example
tetronic and tetramic acid derivatives, e.g. Spirodiclofen (II-22-1);
(23) Mitochondrial complex IV electron transport inhibitors, for example
phosphines, e.g. Aluminium phosphide (II-23-1), Calcium phosphide (II-23-2), Phosphine (II-23-3), and Zinc phosphide (II-23-4); or
Cyanide (II-23-5).
(24) Ryanodine receptor modulators, for example
diamides, e.g. Chlorantraniliprole (II-24-1);

further active ingredients with unknown or uncertain mode of action, for example Amidoflumet (II-25-1), Azadirachtin (II-25-2), Benclothiaz (II-25-3), Benzoximate (II-25-4), Bifenazate (II-25-5), Bromopropylate (II-25-6), Chinomethionat (II-25-7), Cryolite (II-25-8), Cyantraniliprole (Cyazypyr) (II-25-9), Dicofol (II-25-10), Diflovidazin (II-25-11), Fluensulfone (II-25-12), Flufiprole (II-25-13), Fluopyram (II-25-14), Fufenozide (II-25-15), Imidaclothiz (II-25-16), Iprodione (II-25-17), Meperfluthrin (II-25-18), Pyrifluquinazon (II-25-19), Tetramethylfluthrin (II-25-20), and iodomethane (II-25-21); furthermore products based on Bacillus firmus (including but not limited to strain CNCM I-1582, such as, for example,VOTiVO™, BioNem) (II-25-22) Bacillus subtilis GB03 (II-25-23) and QST 713 (II-25-24), Bacillus amyloliquefaciens FZB24 (II-25-25) and FZB 42 (II-25-26), Bacillus thuringiensis subspecies aizawai (II-25-27), kurstaki (II-25-28), tenebrionis (II-25-29) and israelensis (II-25-30), Metarhizium anisopliae F52 (II-25-31), Metschnikowia fructicola (II-25-32), Paecilomyces lilacinus strain 251 (II-25-33), Paecilomyces fumosoroseus (II-25-34), Nomuraea rileyi (II-25-35), Cydia pomonella granulosis virus (II-25-36), Pyrethrum (II-25-37), Harpin-Protein (II-25-38), Thymol (II-25-39),
or one of the following known active compounds: 3-bromo-N-{2-bromo-4-chloro-6-[(1-cyclopropylethyl)carbamoyl]phenyl}-1-(3-chloropyridin-2-yl)-1H-pyrazole-5-carboxamide (II-25-40) (known from W02005/077934), 4-{[(6-bromopyridin-3-yl)methyl](2-fluoroethyl)amino}furan-2(5H)-one (II-25-41) (known from W02007/115644), 4-{[(6-fluoropyridin-3-yl)methyl](2,2-difluoroethyl)amino}furan-2(5H)-one (II-25-42) (known from W02007/115644), 4-{[(2-chloro-1,3-thiazol-5-yl)methyl](2-fluoroethyl)amino}furan-2(5H)-one (II-25-43) (known from W02007/115644), 4-{[(6-chlorpyridin-3-yl)methyl](2-fluoroethyl)amino}furan-2(5H)-one (II-25-44) (known from W02007/115644), Flupyradifurone (II-25-45), 4-{[(6-chlor-5-fluoropyridin-3-yl)methyl](methyl)amino}furan-2(5H)-one (II-25-46) (known from W02007/115643), 4-{[(5,6-dichloropyridin-3-yl)methyl](2-fluoroethyl)amino}furan-2(5H)-one (II-25-47) (known from W02007/115646), 4-{[(6-chloro-5-fluoropyridin-3-yl)methyl](cyclopropyl)amino}furan-2(5H)-one (II-25-48) (known from W02007/115643), 4-{[(6-chloropyridin-3-yl)methyl](cyclopropyl)amino}furan-2(5H)-one (II-25-49) (known from EP-A-0 539 588), 4-{[(6-chlorpyridin-3-yl)methyl](methyl)amino}furan-2(5H)-one (II-25-50) (known from EP-A-0 539 588), {[1-(6-chloropyridin-3-yl)ethyl](methyl)oxido-$\lambda^4$-sulfanylidene}cyanamide (II-25-51) (known from W02007/149134) and its diastereomers {[(1R)-1-(6-chloropyridin-3-yl)ethyl](methyl)oxido-$\lambda^4$-sulfanylidene}cyanamide (A) (II-25-52), and {[(1S)-1-(6-chloropyridin-3-yl)ethyl](methyl)oxido-$\lambda^4$-sulfanylidene}cyanamide (B) (II-25-53) (also known from W02007/149134) as well as Sulfoxaflor (II-25-54) and its diastereomers [(R)-methyl(oxido){(1R)-1-[6-(trifluoromethyl)pyridin-3-yl]ethyl}-$\lambda^4$-sulfanylidene]cyanamide (A1) (II-25-55), and [(S)-methyl(oxido){(1S)-1-[6-(trifluoromethyl)pyridin-3-yl]ethyl}-$\lambda^4$-sulfanylidene]cyanamide (A2) (II-25-56), referred to as group of diastereomers A (known from W02010/074747, W02010/074751), [(R)-methyl(oxido){(1S)-1-[6-(trifluoromethyl)pyridin-3-yl]ethyl}-$\lambda^4$-sulfanylidene]cyanamide (B1) (II-25-57), and [(S)-methyl(oxido){(1R)-1-[6-(trifluoromethyl)pyridin-3-yl]ethyl}-$\lambda^4$-sulfanylidene]cyanamide (B2) (II-25-58), referred to as group of diastereomers B (also known from WO2010/074747, WO2010/074751), and 11-(4-chloro-2,6-dimethylphenyl)-12-hydroxy-1,4-dioxa-9-azadispiro[4.2.4.2]tetradec-11-en-10-one (II-25-59) (known from W02006/089633), 3-(4'-fluoro-2,4-dimethylbiphenyl-3-yl)-4-hydroxy-8-oxa-1-azaspiro[4.5]dec-3-en-2-one (II-25-60) (known from W02008/067911), 1-{2-fluoro-4-methyl-5-[(2,2,2-trifluorethyl)sulfinyl]phenyl}-3-(trifluoromethyl)-1H-1,2,4-triazol-5-amine (II-25-61) (known from W02006/043635), [(3S,4aR,12R,12aS,12bS)-3-[(cyclopropylcarbonyl)oxy]-6,12-dihydroxy-4,12b-dimethyl-11-oxo-9-(pyridin-3-yl)-1,3,4,4a,5,6,6a,12,12a,12b-decahydro-2H,11H-benzo[f]pyrano[4,3-b]chromen-4-yl]methyl cyclopropanecarboxylate (II-25-62) (known from W02008/066153), 2-cyano-3-(difluoromethoxy)-N,N-dimethylbenzenesulfonamide (II-25-63) (known from W02006/056433), 2-cyano-3-(difluoromethoxy)-N-methylbenzenesulfonamide (II-25-64) (known from W02006/100288), 2-cyano-3-(difluoromethoxy)-N-ethylbenzenesulfonamide (II-25-65) (known from W02005/035486), 4-(difluoromethoxy)-N-ethyl-N-methyl-1,2-benzothiazol-3-amine 1,1-dioxide (II-25-66) (known from W02007/057407), N-[1-(2,3-dimethylphenyl)-2-(3,5-dimethylphenyl)ethyl]-4,5-dihydro-1,3-thiazol-2-amine (II-25-67) (known from W02008/104503), {1'-[(2E)-3-(4-chlorophenyl)prop-2-en-1-yl]-5-fluorospiro[indole-3,4'-piperidin]-1(2H)-yl}(2-chloropyridin-4-yl)methanone (II-25-68) (known from W02003/106457), 3-(2,5-dimethylphenyl)-4-hydroxy-8-methoxy-1,8-diazaspiro[4.5]dec-3-en-2-one (II-25-69) (known from W0-2009/049851), 3-(2,5-dimethylphenyl)-8-methoxy-2-oxo-1,8-diazaspiro[4.5]dec-3-en-4-yl ethyl carbonate (II-25-50) (known from W02009/049851), 4-(but-2-yn-1-yloxy)-6-(3,5-dimethylpiperidin-1-yl)-5-fluoropyrimidine (II-25-71) (known from W02004/099160), (2,2,3,3,4,4,5,5-octafluoropentyl)(3,3,3-trifluoropropyl)malononitrile (II-25-72) (known from W02005/063094), (2,2,3,3,4,4,5,5-octafluoropentyl)(3,3,4,4,4-pentafluorobutyl)malononitrile (II-25-73) (known from W02005/063094), 8-[2-(cyclopropylmethoxy)-4-(trifluoromethyl)phenoxy]-3-[6-(trifluoromethyl)pyridazin-3-yl]-3-azabicyclo[3.2.1]octane (II-25-74) (known from W02007/040280), Flometoquin (II-25-75), PF1364 (CAS-Reg.No. 1204776-60-2) (II-25-76) (known from JP2010/018586), 5-[5-(3,5-dichlorophenyl)-5-(trifluoromethyl)-4,5-dihydro-1,2-oxazol-3-yl]-2-(1H-1,2,4-triazol-1-yl)benzonitrile (II-25-77) (known from W02007/075459), 5-[5-(2-chloropyridin-4-yl)-5-(trifluoromethyl)-4,5-dihydro-1,2-oxazol-3-yl]-2-(1H-1,2,4-triazol-1-yl)benzonitrile (II-25-78) (known from W02007/075459), 4-[5-(3,5-dichlorophenyl)-5-(trifluoromethyl)-4,5-dihydro-1,2-oxazol-3-yl]-2-methyl-N-{2-oxo-2-[(2,2,2-trifluoroethyl)amino]ethyl}benzamide (II-25-79)

(known from W02005/085216), 4-{[(6-chloropyridin-3-yl)methyl](cyclopropyl)amino}-1,3-oxazol-2(5H)-one (II-25-80), 4-{[(6-chloropyridin-3-yl)methyl](2,2-difluoroethyl)amino}-1,3-oxazol-2(5H)-one (II-25-81), 4-{[(6-chloropyridin-3-yl)methyl](ethyl)amino}-1,3-oxazol-2(5H)-one (II-25-82), 4-{[(6-chloropyridin-3-yl)methyl](methyl) amino}-1,3-oxazol-2(5H)-one (II-25-83) (all known from WO2010/005692), NNI-0711 (II-25-84) (known from W02002/096882), 1-acetyl-N-[4-(1,1,1,3,3,3-hexafluoro-2-methoxypropan-2-yl)-3-isobutylphenyl]-N-isobutyryl-3,5-dimethyl-1H-pyrazole-4-carboxamide (II-25-85) (known from W02002/096882), methyl 2-[2-({[3-bromo-1-(3-chloropyridin-2-yl)-1H-pyrazol-5-yl]carbonyl}amino)-5-chloro-3-methylbenzoyl]-2-methylhydrazinecarboxylate (II-25-86) (known from W02005/085216), methyl 2-[2-({[3-bromo-1-(3-chloropyridin-2-yl)-1H-pyrazol-5-yl]carbonyl}amino)-5-cyano-3-methylbenzoyl]-2-ethylhydrazinecarboxylate (II-25-87) (known from W02005/085216), methyl 2-[2-({[3-bromo-1-(3-chloropyridin-2-yl)-1H-pyrazol-5-yl]carbonyl}amino)-5-cyano-3-methylbenzoyl]-2-methyl-hydrazinecarboxylate (II-25-88) (known from W02005/085216), methyl 2-[3,5-dibromo-2-({ [3-bromo-1-(3-chloropyridin-2-yl)-1H-pyrazol-5-yl]carbonyl}amino)benzoyl]-1,2-diethylhydrazinecarboxylate (II-25-89) (known from W02005/085216), methyl 2-[3,5-dibromo-2-({[3-bromo-1-(3-chloropyridin-2-yl)-1H-pyrazol-5-yl]carbonyl}amino)benzoyl]-2-ethylhydrazinecarboxylate (II-25-90) (known from WO2005/085216), (5RS, 7RS;5RS,7SR)-1-(6-chloro-3-pyridylmethyl)-1,2,3,5,6,7-hexahydro-7-methyl-8-nitro-5-propoxyimidazo[1,2-a] pyridine (II-25-91) (known from WO2007/101369), 2-{6-[2-(5-fluoropyridin-3-yl)-1,3-thiazol-5-yl]pyridin-2-yl}pyrimidine (II-25-92) (known from WO2010/006713), 2-{6-[2-(pyridin-3-yl)-1,3-thiazol-5-yl]pyridin-2-yl}pyrimidine (II-25-93) (known from WO2010/006713), 1-(3-chloropyridin-2-yl)-N-[4-cyano-2-methyl-6-(methylcarbamoyl) phenyl]-3-{ [5-(trifluoromethyl)-1H-tetrazol-1-yl]methyl}-1H-pyrazole-5-carboxamide (II-25-94) (known from WO2010/069502), 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide (II-25-95) (known from WO2010/069502), N-[2-(tert-butylcarbamoyl)-4-cyano-6-methylphenyl]-1-(3-chloropyridin-2-yl)-3-{[5-(trifluoromethyl)-1H-tetrazol-1-yl] methyl}-1H-pyrazole-5-carboxamide (II-25-96) (known from WO2010/069502), N-[2-(tert-butylcarbamoyl)-4-cyano-6-methylphenyl]-1-(3-chloropyridin-2-yl)-3-{[5-(trifluoromethyl)-2H-tetrazol-2-yl]methyl}-1H-pyrazole-5-carboxamide (II-25-97) (known from W02010/069502), (1E)-N-[(6-chloropyridin-3-yl)methyl]-N'-cyano-N-(2,2-difluoroethyl)-ethanimidamide (II-25-98) (known from W02008/009360), N-[2-(5-amino-1,3,4-thiadiazol-2-yl)-4-chloro-6-methylphenyl]-3-bromo-1-(3-chloropyridin-2-yl)-1H-pyrazole-5-carboxamide (II-25-99) (known from CN102057925), and methyl 2-[3,5-dibromo-2-({[3-bromo-1-(3-chloropyridin-2-yl)-1H-pyrazol-5-yl]carbonyl} amino)benzoyl]-2-ethyl-1-methylhydrazinecarboxylate (II-25-100) (known from WO2011/049233).
or further biological control agents selected from bacteria, in particular spore-forming bacteria, fungi or yeasts, protozoas, viruses.

**2.** Combinations according to claim 1, wherein the compound of formula (I) is compound (I-A)

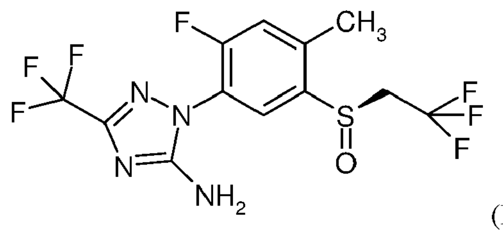

(I-A)

**3.** Combinations according to claim 1, wherein the compound of the formula (I) is compound (I-B)

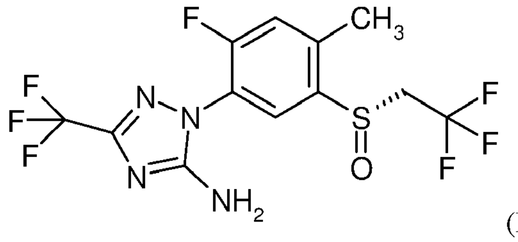

(I-B)

**4.** Combinations according to any of claims 1 to 3, wherein the further insecticide and / or acaricide and / or biological control agent from the group (II) is selected from
Abamectin, Acephate, Acequinocyl, Acetamiprid, Acrinathrin, Aldicarb, Alpha-Cypermethrin, Amitraz, Azadirachtin, Azinphos-methyl, Benfuracarb, Beta-Cyfluthrin, Bifenazate, Bifenthrin, Bensultap (Nereistoxin), Buprofezin, Carbaryl, Carbofuran, Carbosulfan, Cartap hydrochloride, Chloranthraniliprole (Rynazypyr), Chlorfenapyr, Chlorfluazuron, Chloropicrin, Chlorpyrifos, Clothianidin, Cyantraniliprole (Cyazypyr), Cyfluthrin, Cyhalothrin, Cypermethrin, Cyromazine, Deltamethrin, Diafenthiuron, Diazinon, Dichloropropene, Dichlorfos, Dicofol, Diflubenzuron, Dimethoate, Dinotefuran, Disulfoton, Emamectin-(benzoate), Endosulfan, Ethoprophos, Etofenprox, Etoxazole, Fenamiphos, Fenbutatin oxide, Fenitrothion, Fenobucarb, Fenoxycarb, Fenpropathrin, Fenpyroximate, Fenvalerate, Fipronil, Fluacrypyrim, Fluensulfone, Flufenoxuron, Flupyradifurone, Fosthiazate, Gamma-Cyhalothrin, Hexythiazox, Hexaflumuron, Imidacloprid, Imidaclothiz, Indoxacarb, Lambda-Cyhalothrin, Lepimectin, Lufenuron, Malathion, Metaldehyde, Methidathion, Methomyl, Milbemectin, Monocrotophos, Nitenpyram, Oxamyl, Permethrin, Pirimicarb, Profenofos, Propargite, Pymetrozine, Pyrafluprole, Pyrethrin, Pyridaben, Pyrifluquinazone, Pyrimethanil, Pyrimidifen, Pyriprole, Pyriproxyfen, Quinalphos, Resmethrin, Spinetoram, Spinosad, Spirodiclofen, Sulfoxaflor, Tau-Fluvalinate, Tebufenpyrad, Teflubenzuron, Tefluthrin, Thiacloprid, Thiamethoxam, Thiodicarb, Trichlorfon, Triflumuron; Zeta-Cypermethrin, 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide/ 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamid, 2-{6-[2-(5-fluoropyridin-3-yl)-1,3-thiazol-5-yl]pyridin-2-yl}pyrimidine, 2-{6-[2-(pyridin-3-yl)-1,3-thiazol-5-yl]pyridin-2-yl}pyrimidine, (1E)-N-[(6-chloropyridin-3-yl)methyl]-N'-cyano-N-(2,2-difluoroethyl)ethanimidamide, Bacillus firmus I-1582, Bacillus subtilis GB03 and QST 713, Bacillus amyloliquefaciens FZB24 and FZB 42, Bacillus thuringiensis subspecies aizawai, kurstaki, tenebrionis and israelensis, Metarhizium anisopliae F52, Metschnikowia fructicola, Paecilomyces lilacinus strain 251, Paecilomyces fumosoroseus, Nomuraea rileyi, Cydia pomonella granulosis virus, Pyrethrum, Harpin-Protein and Thymol.

5. Combinations according to any of claims 1 to 4, wherein the further insecticide and / or acaricide and / or biological control agent from the group (II) is selected from
Abamectin, Acetamiprid, Acrinathrin, Alpha-Cypermethrin, Beta-Cyfluthrin, Bifenthrin, Buprofezin, Flupyradifurone, Chlorfenapyr, Chlorpyrifos, Clothianidin, Cyantraniliprole, Cyfluthrin, Cypermethrin, Deltamethrin, Diafenthiuron, Dinotefuran, Emamectin-(benzoate), Fenpyroximate, Fipronil, Fluensulfone, Gamma-Cyhalothrin, Imidacloprid, Indoxacarb, L-Cyhalothrin, Milbemectin, Nitenpyram, Pyrifluquinazone, Pymetrozine, Chloranthraniliprole, Spinetoram, Spinosad, Spirodiclofen, Sulfoxaflor, Tebufenpyrad, Tefluthrin, Thiacloprid, Thiamethoxam, Thiodicarb, Triflumuron; 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide/ 1-(3-chloropyridin-2-yl)-N-[4-cyano-2-methyl-6-(methylcarbamoyl) phenyl]-3-{[5-(trifluoromethyl)-2H-tetrazol-2-yl]methyl}-1H-pyrazole-5-carboxamide; 2-{6-[2-(5-fluoropyridin-3-yl)-1,3-thiazol-5-yl]pyridin-2-yl}pyrimidine, 2-{6-[2-(pyridin-3-yl)-1,3-thiazol-5-yl]pyridin-2-yl}pyrimidine (1E)-N-[(6-chloropyridin-3-yl)methyl]-N'-cyano-N-(2,2-difluoroethyl)ethanimidamide, Bacillus firmus I-1582, Bacillus subtilis GB03 and QST 713, Bacillus amyloliquefaciens FZB24 and FZB 42, Bacillus thuringiensis subspecies aizawai, kurstaki, tenebrionis and israelensis, Metarhizium anisopliae F52, Paecilomyces lilacinus strain 251, Nomuraea rileyi.

6. Use of active ingredient combinations according to any of claims 1 to 5 comprising a compound of the formula (I) in combination with at least one biological control agent selected from bacteria, fungi or yeasts, protozoas, viruses, and entomopathogenic nematodes, optionally in the presence of inoculants, for reducing overall damage of plants and plant parts as well as losses in harvested fruits or vegetables caused by insects, nematodes and phytopathogens.

7. The use according to claim 6, wherein the plant part is a seed or a plant emerging from the seed.

8. The use according to claim 7, wherein the seed is from a conventional or a transgenic plant.

9. The use according to claim 7 or 8 wherein the plant is a horticultural crop selected from carrots, pumpkin, squash, zucchini, potato, sweet corn, onions, ornamentals, medicinal herbs, culinary herbs, tomatoes, spinach, pepper, melon, lettuce, cucumber, celery, beets, cabbage, cauliflower, broccoli, Brussels sprouts, turnip cabbage, kale, radish, rutabaga, turnip, asparagus, bean, pea, apples, raspberry, strawberry, banana, mango, grapes, peaches, pears, guava, pineapple, pomegranate, garlic, capsicum, chili, radish, star fruit, tapioca, walnuts, lemon, mandarin, mangold, mushroom, olive, orange, papaya, paprika, passion fruit, peanuts, pecan nuts, prune, pistachio nuts, persimmon, pamplemouse (grapefruit), eggplant, endive, cranberry, gooseberry, hazel nuts, kiwifruit, almonds, amaranth, apricot, artichoke, avocado, blackberry, cashew nut, cherry, clementine, coconut, and cantaloupes.

10. The use according to claim 7 or 8, wherein the plant is a broad acre crop selected from cotton, corn, soybean, cereals, canola, oil seed rape, sugar cane and rice.

11. A method for reducing overall damage of plants and plant parts as well as losses in harvested fruits or vegetables

caused by insects and/or phytopathogens comprising the step of simultaneously or sequentially applying a compound of formula (I) as defined in any of claims 1 to 3 and at least one biological control agent selected from bacteria, fungi or yeasts, protozoas, viruses, and optionally at least an inoculant on the plant, plant parts, harvested fruits or vegetables.

**12.** An active ingredient combination as defined in any of claims 1 to 5 comprising extenders and /or surfactants.

Europäisches Patentamt
European Patent Office
Office européen des brevets

# EUROPEAN SEARCH REPORT

Application Number
EP 11 19 3829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 382 865 A1 (BAYER CROPSCIENCE AG [DE]) 2 November 2011 (2011-11-02)<br>* compounds I-2; I-3; II-29-31 *<br>* tables B-2; D-2 *<br>* paragraphs [0061], [0071] *<br>----- | 1-5,12 | INV.<br>A01N43/653<br>A01P7/00<br>A01N63/00<br>A01N63/04<br>A01N43/90<br>A01N47/40<br>A01N53/00<br>A01N43/88<br>A01N43/56<br>A01N43/36<br>A01N57/16<br>A01N51/00<br>A01N47/34<br>A01N57/12<br>A01N47/02<br>A01N47/38<br>A01N43/707 |
| X | WO 2011/152320 A1 (KUMIAI CHEMICAL INDUSTRY CO [JP]; IHARA CHEMICAL IND CO [JP]; TORIYABE)<br>8 December 2011 (2011-12-08)<br>* compounds I-III *<br>* paragraphs [0022], [0031], [0032], [0036] - [0055], [0057] - [0062], [0065] - [0068] *<br>* tables 1-4 *<br>----- | 1-12 | |
| A | WO 2011/020567 A1 (BAYER CROPSCIENCE AG [DE]; ALIG BERND [DE]; ANTONS STEFAN [DE]; FISCHE) 24 February 2011 (2011-02-24)<br>* page 25, lines 15-16 *<br>* claim 9 *<br>----- | 1-5,12 | TECHNICAL FIELDS SEARCHED (IPC) |
| A | WO 2011/029506 A1 (BAYER CROPSCIENCE AG [DE]; ALIG BERND [DE]; ANTONS STEFAN [DE]; FISCHE) 17 March 2011 (2011-03-17)<br>* page 28, lines 7-8 *<br>* claim 6 *<br>----- | 1-5,12 | A01N |

The present search report has been drawn up for all claims

1

| Place of search | Date of completion of the search | Examiner |
|---|---|---|
| Munich | 4 April 2012 | Habermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 11 19 3829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | | | A01N43/54<br>A01N43/22<br>A01N47/24<br>A01N31/08 |
| | | | TECHNICAL FIELDS SEARCHED (IPC) |
| | | | |

The present search report has been drawn up for all claims

1

| Place of search | Date of completion of the search | Examiner |
|---|---|---|
| Munich | 4 April 2012 | Habermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................
& : member of the same patent family, corresponding document

EPO FORM 1503 03.82 (P04C01)

Europäisches Patentamt
European Patent Office
Office européen des brevets

Application Number
EP 11 19 3829

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches Patentamt
European Patent Office
Office européen des brevets

## LACK OF UNITY OF INVENTION SHEET B

Application Number

EP 11 19 3829

The Search Division considers that the present European patent application does not comply with the requirements of unity of invention and relates to several inventions or groups of inventions, namely:

1. claims: 1-5, 12(all partially)

Active ingredient combination comprising
a) a compound selected from the group consisting of formula (I), (I-A) and (I-B)
and
b) a further insecticide selected from the group consisting of acetylcholinesterase inhibitors (II-1)

---

2. claims: 1-5, 12(all partially)

Active ingredient combination comprising
a) a compound selected from the group consisting of formula (I), (I-A) and (I-B)
and
b) a further insecticide selected from the group consisting of GABA-gated chloride channel antagonists (II-2)

---

3. claims: 1-5, 12(all partially)

Active ingredient combination comprising
a) a compound selected from the group consisting of formula (I), (I-A) and (I-B)
and
b) a further insecticide selected from the group consisting of sodium channel modulators/voltage-dependent sodium channel blockers (II-3)

---

4. claims: 1-5, 12(all partially)

Active ingredient combination comprising
a) a compound selected from the group consisting of formula (I), (I-A) and (I-B)
and
b) a further insecticide selected from the group consisting of nicotinic acetylcholine receptor antagonists (II-4)

---

5. claims: 1-5, 12(all partially)

Active ingredient combination comprising
a) a compound selected from the group consisting of formula (I), (I-A) and (I-B)
and
b) a further insecticide selected from the group consisting of nicotinic acetylcholine receptor allosteric activators (II-5)

---

Europäisches Patentamt
European Patent Office
Office européen des brevets

## LACK OF UNITY OF INVENTION
## SHEET B

Application Number
EP 11 19 3829

The Search Division considers that the present European patent application does not comply with the requirements of unity of invention and relates to several inventions or groups of inventions, namely:

6. claims: 1-5, 12(all partially)

Active ingredient combination comprising
a) a compound selected from the group consisting of formula (I), (I-A) and (I-B)
and
b) a further insecticide selected from the group consisting of chloride channel activators (II-6)
---

7. claims: 1-4, 12(all partially)

Active ingredient combination comprising
a) a compound selected from the group consisting of formula (I), (I-A) and (I-B)
and
b) a further insecticide selected from the group consisting of juvenile hormone mimics (II-7)
---

8. claims: 1-3, 12(all partially)

Active ingredient combination comprising
a) a compound selected from the group consisting of formula (I), (I-A) and (I-B)
and
b) a further insecticide selected from the group consisting of non-specific multi-site inhibitors (II-8)
---

9. claims: 1-5, 12(all partially)

Active ingredient combination comprising
a) a compound selected from the group consisting of formula (I), (I-A) and (I-B)
and
b) a further insecticide selected from the group consisting of selective homopteran feeding blockers (II-9)
---

10. claims: 1-4, 12(all partially)

Active ingredient combination comprising
a) a compound selected from the group consisting of formula (I), (I-A) and (I-B)
and
b) a further insecticide selected from the group consisting of Mite growth inhibitors (II-10)
---

Europäisches Patentamt
European Patent Office
Office européen des brevets

**LACK OF UNITY OF INVENTION
SHEET B**

Application Number
EP 11 19 3829

The Search Division considers that the present European patent application does not comply with the requirements of unity of invention and relates to several inventions or groups of inventions, namely:

11. claims: 1-5, 12(all partially)

Active ingredient combination comprising
a) a compound selected from the group consisting of formula (I), (I-A) and (I-B)
and
b) a further insecticide selected from the group consisting of inhibitors of mitochondrial ATP synthase (II-12)

---

12. claims: 1-5, 12(all partially)

Active ingredient combination comprising
a) a compound selected from the group consisting of formula (I), (I-A) and (I-B)
and
b) a further insecticide selected from the group consisting of uncouplers of oxidative phosphorylation via disruption of the proton gradient (II-13)

---

13. claims: 1-4, 12(all partially)

Active ingredient combination comprising
a) a compound selected from the group consisting of formula (I), (I-A) and (I-B)
and
b) a further insecticide selected from the group consisting of nicotinic acetylcholine receptor channel blockers (II-14)

---

14. claims: 1-5, 12(all partially)

Active ingredient combination comprising
a) a compound selected from the group consisting of formula (I), (I-A) and (I-B)
and
b) a further insecticide selected from the group consisting of inhibitors of chitin biosynthesis, type 0 (II-15)

---

15. claims: 1-5, 12(all partially)

Active ingredient combination comprising
a) a compound selected from the group consisting of formula (I), (I-A) and (I-B)
and
b) a further insecticide selected from the group consisting of inhibitors of chitin biosynthesis, type 1 (II-16)

---

Europäisches Patentamt
European Patent Office
Office européen des brevets

**LACK OF UNITY OF INVENTION SHEET B**

Application Number
EP 11 19 3829

The Search Division considers that the present European patent application does not comply with the requirements of unity of invention and relates to several inventions or groups of inventions, namely:

16. claims: 1-4, 12(all partially)

Active ingredient combination comprising
a) a compound selected from the group consisting of formula (I), (I-A) and (I-B)
and
b) a further insecticide selected from the group consisting of moulting disruptors (II-17)

---

17. claims: 1-4, 12(all partially)

Active ingredient combination comprising
a) a compound selected from the group consisting of formula (I), (I-A) and (I-B)
and
b) a further insecticide selected from the group consisting of octopamine receptor agonists (II-18)

---

18. claims: 1-4, 12(all partially)

Active ingredient combination comprising
a) a compound selected from the group consisting of formula (I), (I-A) and (I-B)
and
b) a further insecticide selected from the group consisting of mitochondrial complex III electron transport inhibitors (II-19)

---

19. claims: 1-5, 12(all partially)

Active ingredient combination comprising
a) a compound selected from the group consisting of formula (I), (I-A) and (I-B)
and
b) a further insecticide selected from the group consisting of mitochondrial complex I electron transport inhibitors (II-20)

---

20. claims: 1-5, 12(all partially)

Active ingredient combination comprising
a) a compound selected from the group consisting of formula (I), (I-A) and (I-B)
and
b) a further insecticide selected from the group consisting of voltage-dependent sodium channel blockers (II-21)

---

Europäisches Patentamt
European Patent Office
Office européen des brevets

**LACK OF UNITY OF INVENTION**
**SHEET B**

Application Number
EP 11 19 3829

The Search Division considers that the present European patent application does not comply with the requirements of unity of invention and relates to several inventions or groups of inventions, namely:

21. claims: 1-5, 12(all partially)

Active ingredient combination comprising
a) a compound selected from the group consisting of formula (I), (I-A) and (I-B)
and
b) a further insecticide selected from the group consisting of inhibitors of acetyl CoA carboxylase (II-22)

---

22. claims: 1-3, 12(all partially)

Active ingredient combination comprising
a) a compound selected from the group consisting of formula (I), (I-A) and (I-B)
and
b) a further insecticide selected from the group consisting of mitochondrial complex IV electron transport inhibitors(II-23)

---

23. claims: 1-5, 12(all partially)

Active ingredient combination comprising
a) a compound selected from the group consisting of formula (I), (I-A) and (I-B)
and
b) a further insecticide selected from the group consisting of ryanodine receptor modulators (II-24)

---

24. claims: 1-5, 12(all partially)

Active ingredient combination comprising
a) a compound selected from the group consisting of formula (I), (I-A) and (I-B)
and
b) a further insecticide selected from the group consisting of active ingredients with unknown or uncertain mode of action (II-25) excluding biological control agents

---

25. claims: 6-11(completely); 1-5, 12(partially)

Active ingredient combination comprising
a) a compound selected from the group consisting of formula (I), (I-A) and (I-B)
and
b) a further biological insecticide selected from the group consisting of bacteria(e.g. II-11), fungi, yeasts, protozoas

Europäisches Patentamt
European Patent Office
Office européen des brevets

**LACK OF UNITY OF INVENTION**
**SHEET B**

Application Number
EP 11 19 3829

The Search Division considers that the present European patent application does not comply with the requirements of unity of invention and relates to several inventions or groups of inventions, namely:

and viruses

---

## ANNEX TO THE EUROPEAN SEARCH REPORT ON EUROPEAN PATENT APPLICATION NO. EP 11 19 3829

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2012

| Patent document cited in search report | Publication date | Patent family member(s) | Publication date |
|---|---|---|---|
| EP 2382865 A1 | 02-11-2011 | EP 2382865 A1 | 02-11-2011 |
| | | US 2011275583 A1 | 10-11-2011 |
| | | WO 2011134964 A1 | 03-11-2011 |
| WO 2011152320 A1 | 08-12-2011 | NONE | |
| WO 2011020567 A1 | 24-02-2011 | US 2011046194 A1 | 24-02-2011 |
| | | WO 2011020567 A1 | 24-02-2011 |
| WO 2011029506 A1 | 17-03-2011 | US 2011045104 A1 | 24-02-2011 |
| | | WO 2011029506 A1 | 17-03-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 1999055668 A
- WO 2006043635 A
- WO 2005077934 A
- WO 2007115644 A
- WO 2007115643 A
- WO 2007115646 A
- EP 0539588 A
- WO 2007149134 A
- WO 2010074747 A
- WO 2010074751 A
- WO 2006089633 A
- WO 2008067911 A
- WO 2008066153 A
- WO 2006056433 A
- WO 2006100288 A
- WO 2005035486 A
- WO 2007057407 A
- WO 2008104503 A
- WO 2003106457 A
- WO 2009049851 A
- WO 2004099160 A
- WO 2005063094 A
- WO 2007040280 A
- JP 2010018586 A
- WO 2007075459 A
- WO 2005085216 A
- WO 2010005692 A
- WO 2002096882 A
- WO 2007101369 A
- WO 2010006713 A
- WO 2010069502 A
- WO 2008009360 A
- CN 102057925
- WO 2011049233 A
- US 6406690 B


### Non-patent literature cited in the description


- The Pesticide Manual. British Crop Protection Council, 2006
- *Biological Control,* 2008, vol. 45, 288-296
- *Crop Protection,* 2006, vol. 25, 468-475
- **ASH et al.** *Lett Appl Microbiology,* 1991, vol. 13, 202-206
- *Crop Protection,* 2008, vol. 27, 352-361
- **COLBY, S.R.** Calculating Synergistic and antagonistic Responses of Herbicide Combinations. *Weeds,* 1967, vol. 15, 20-22